# EUROPEAN PATENT SPECIFICATION

(11) **EP 4 149 600 B1**
(45) Date of publication and mention of the grant of the patent: **22.07.2026**
(21) Application number: 21804741.3
(22) Date of filing: 17.05.2021
(51) Int. Cl.: A41D 31/30, A41D 13/11, A62B 18/02, B01D 39/16, B01D 39/18, B01D 46/12

(54) **ANTIVIRAL MASK**
ANTIVIRALE MASKE
MASQUE ANTIVIRAL

(30) Priority: 15.05.2020 US 202063025838 P
(43) Date of publication of application: 22.03.2023
(73) Proprietor: Kalaitzis, Parashos, Bayside, New York 11361-1860 (US)
(72) Inventor: Kalaitzis, Parashos, Bayside, New York 11361-1860 (US)
(74) Representative: Meissner Bolte Partnerschaft mbB
(86) International application number: PCT/US2021/032755
(87) International publication number: WO 2021/232010

(56) References cited:
- WO-A1-2012/007723
- US-A1- 2006 144 403
- US-A1- 2010 330 140
- US-A1- 2017 106 217
- US-B1- 6 281 515
- BORKOW ET AL.: "A novel anti-influenza copper oxide containing respiratory face mask", PLOS ONE, vol. 5, no. 6, 25 June 2010 (2010-06-25), pages e11295, XP055738707, DOI: 10.1371/joumal.pone.0011295

## Description

### I. Background

### 1. Field of the Invention

One or more embodiments of the present disclosure relate to use of materials with antiviral properties, and more particularly, use and manufacture of one or more metals with antiviral properties in relation to useful articles.

### 2. Related Art

Certain metallic surfaces and materials have antiviral properties, including the ability to impede or eliminate viruses and other microorganisms in a shorter period of times than other materials.

Accordingly, utilizing these materials for certain applications can be advantageous.

WO 2012/007723 A1 discloses a mask configuration as in the preamble of claim 1 and relates to products for medical and general health use containing metallic copper and discloses to such products for personal use having bacteriostatic and/or antimicrobial effects. A flexible lightweight laminar material comprises a woven mesh of copper wires. The wires may have an average diameter of roughly 50 microns, and are woven with at least 200 wires per inch, defining a plurality of apertures having an average diameter of roughly 75 microns.

US 2017/106217 A1 relates to a mask for covering areas of a wearer's face including a mask body constructed primarily of a material that includes a cidal metal or cidal metal alloy wherein the cidal metal or cidal metal alloy is the major structural component of the mask body. The mask body covers at least a portion of the wearer's nose or mouth and nose when worn on the wearer's face. A filtering portion of the mask comprises cidal metal mesh or cidal metal alloy mesh for providing cidal action, air purification, and self-disinfection.

### II. Brief Description of the Drawings

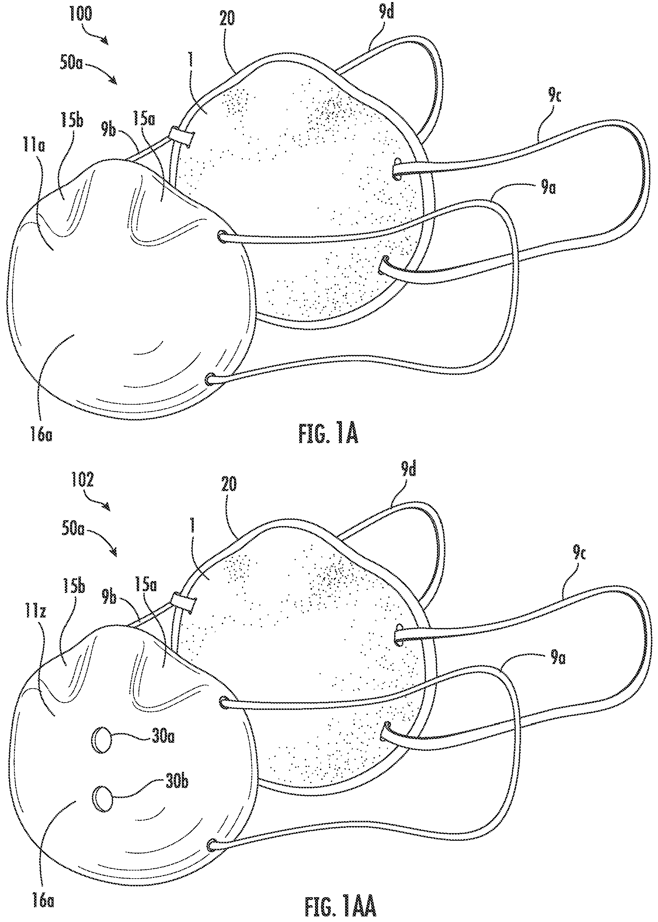

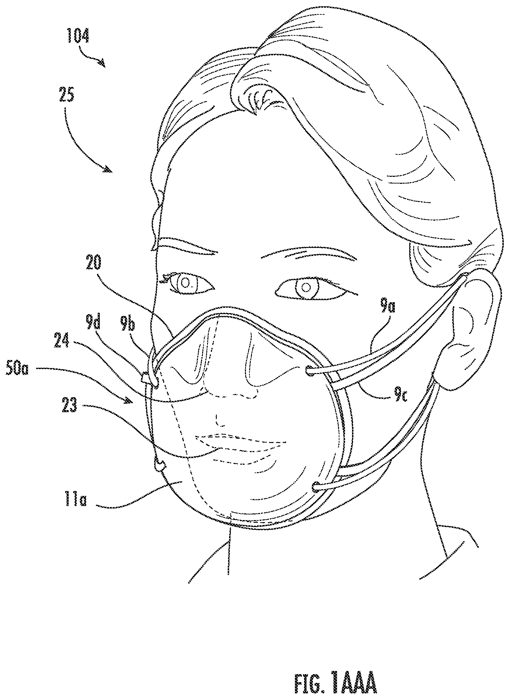

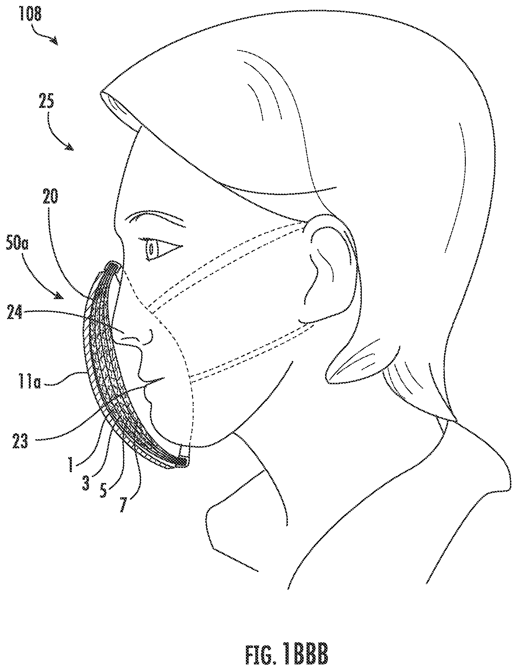

FIG. 1A illustrates a front view of at least one embodiment for a mask configuration according to at least one embodiment of the present disclosure.
FIG. 1AA illustrates a front view of at least one embodiment for a mask configuration according to at least one embodiment of the present disclosure.

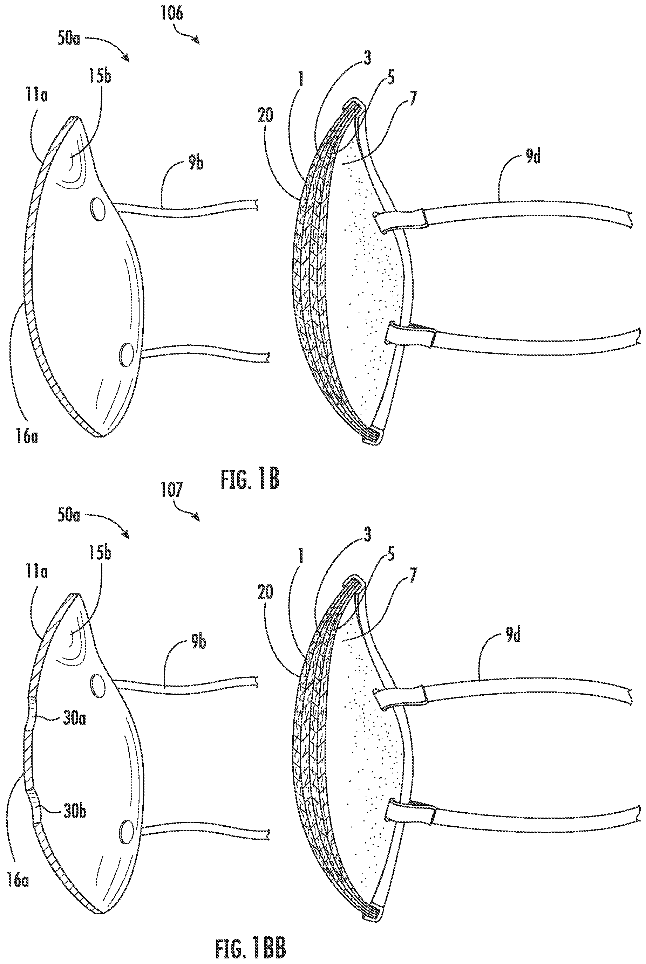

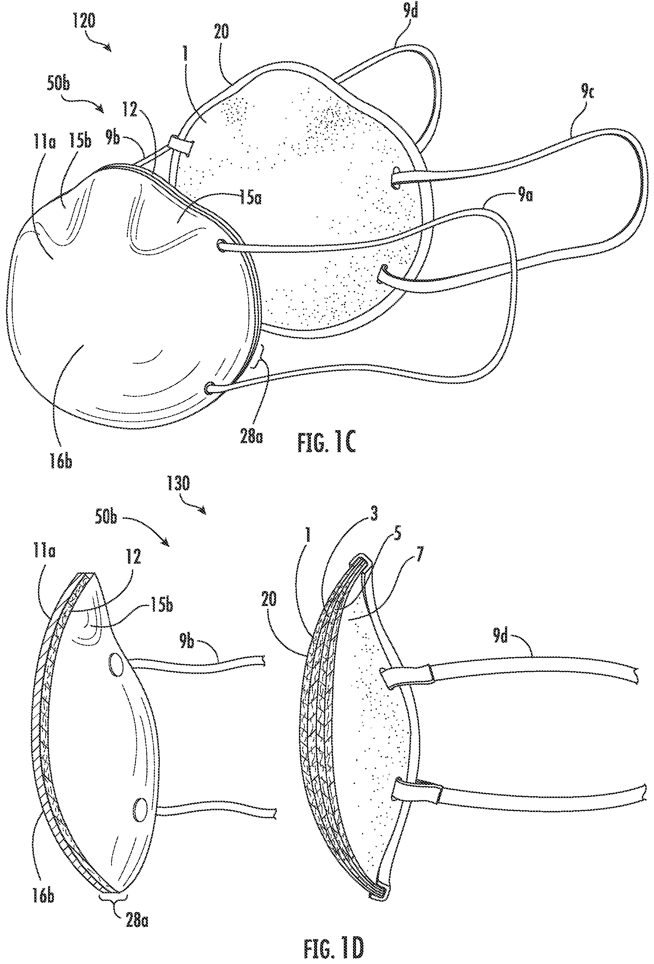

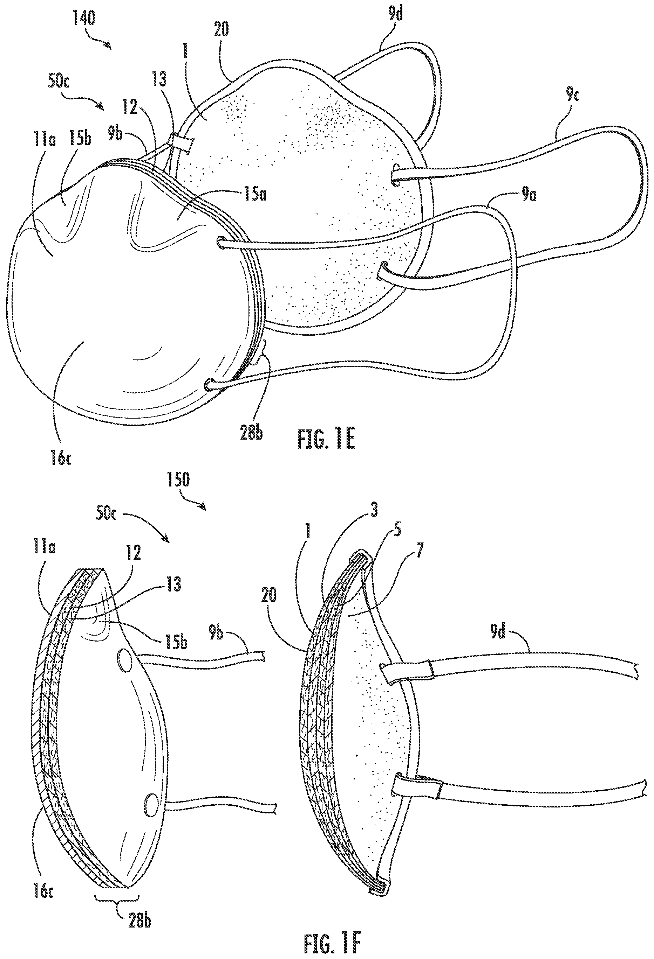

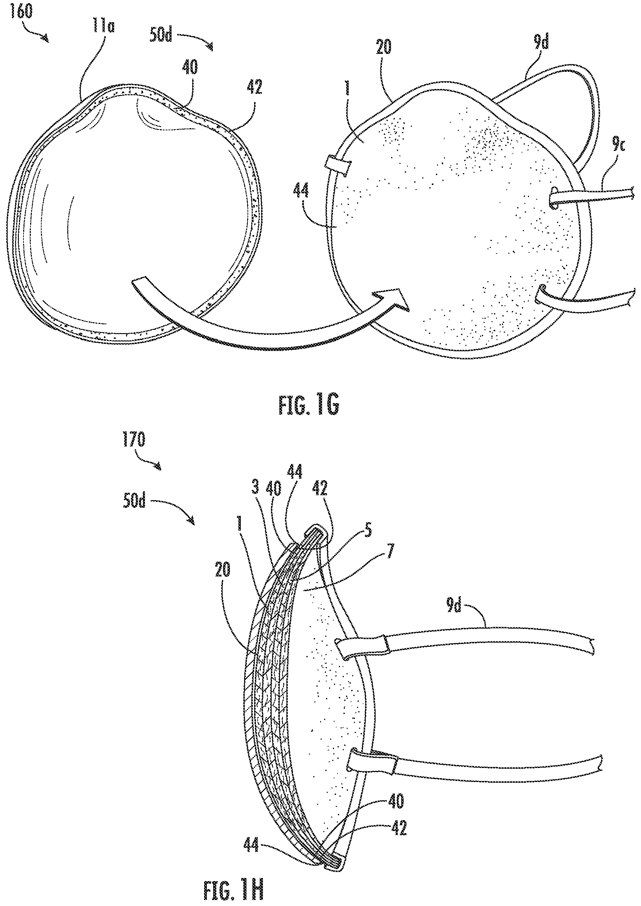

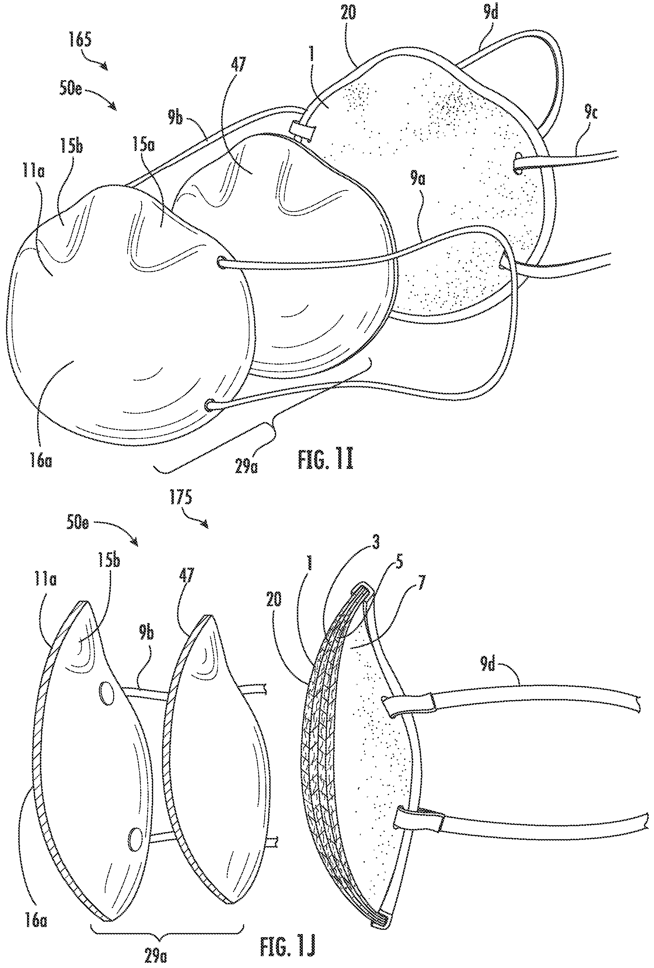

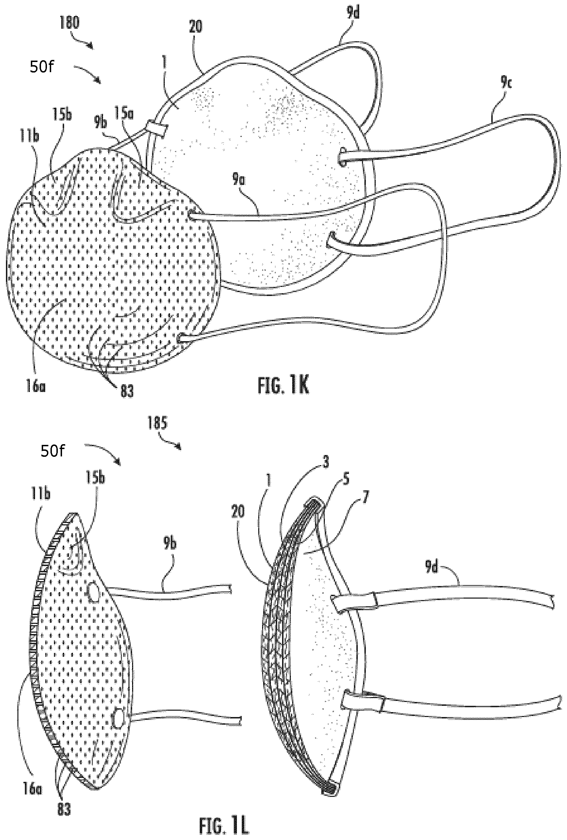

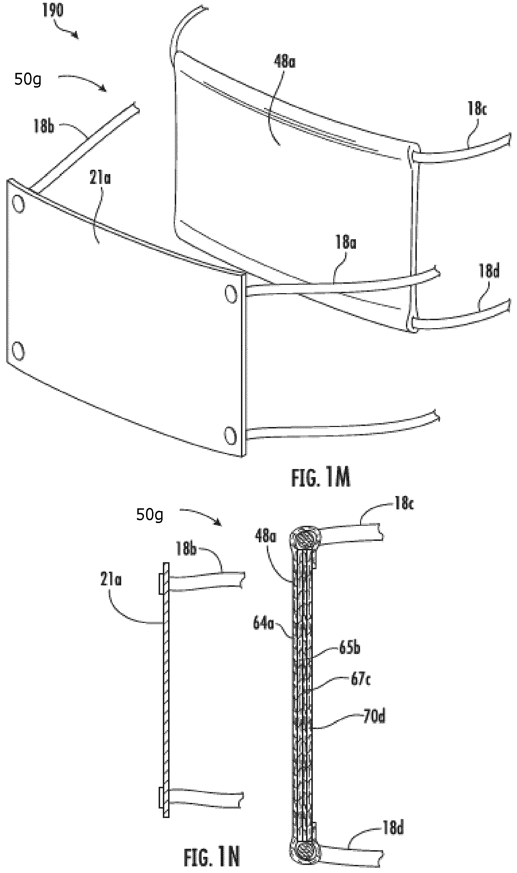

FIG. 1AAA illustrates a front view of a user wearing a mask configuration according to at least one embodiment of the present disclosure.
FIG. 1B illustrates a side cross-sectional view of at least one embodiment of the mask configuration according to FIG. 1A.
FIG. 1BB illustrates a side cross-sectional view of at least one embodiment of the mask configuration according to FIG. 1AA.
FIG. 1BBB illustrates a side cross-sectional view of a user wearing a mask configuration according to at least one embodiment of the present disclosure.
FIG. 1C illustrates a front view of at least one embodiment for a mask configuration according to at least one embodiment of the present disclosure.
FIG. 1D illustrates a side cross-sectional view of the at least one embodiment of the mask configuration according to FIG. 1C.
FIG. 1E illustrates a front view of at least one embodiment for a mask configuration according to at least one embodiment of the present disclosure.
FIG. 1F illustrates a cross-sectional side view of the at least one embodiment of the mask configuration according to FIG. 1E.
FIG. 1G illustrates a front view of at least one embodiment for a mask configuration according to at least one embodiment of the present disclosure.
FIG. 1H illustrates a side cross-sectional view of the at least one embodiment of the mask configuration according to FIG. 1G.
FIG. 1I illustrates a front view of at least one embodiment for a mask configuration according to at least one embodiment of the present disclosure.
FIG. 1J illustrates a cross-sectional side view of the at least one embodiment of the mask configuration according to FIG. 1I.
FIG. 1K illustrates a front view of at least one embodiment for a mask configuration according to at least one embodiment of the present disclosure.
FIG. 1L illustrates a side cross-sectional view of the at least one embodiment of the mask configuration according to FIG. 1K.
FIG. 1M illustrates a front view of at least one embodiment for a mask configuration according to at least one embodiment of the present disclosure.
FIG. 1N illustrates a side cross-sectional view of the at least one embodiment of the mask configuration according to FIG. 1M.
FIG. 2A illustrates a front view of at least one embodiment for a mask configuration according to at least one embodiment of the present disclosure.
FIG. 2B illustrates a side cross-sectional view of the at least one embodiment of the mask configuration according to FIG. 2A.
FIG. 2C illustrates a front view of at least one embodiment for a mask configuration according to at least one embodiment of the present disclosure.
FIG. 2D illustrates a side cross-sectional view of the at least one embodiment of the mask configuration according to FIG. 2C.
FIG. 2E illustrates a front view of at least one embodiment for a mask configuration according to at least one embodiment of the present disclosure.
FIG. 2F illustrates a side cross-sectional view of the at least one embodiment of the mask configuration according to FIG. 2E.
FIG. 2G illustrates a front view of at least one embodiment for a mask configuration according to at least one embodiment of the present disclosure.
FIG. 2H illustrates a side cross-sectional view of the at least one embodiment of the mask configuration according to FIG. 2G.
FIG. 2I illustrates a rear view of the at least one embodiment of the mask configuration according to FIG. 2G.
FIG. 2J illustrates at least one embodiment of a front view of a mask according to at least one embodiment of the present invention.
FIG. 2K illustrates at least one embodiment of a side cross-sectional view of a mask according to at least one embodiment of the present invention.
FIG. 3 illustrates a side cross-sectional view of at least one embodiment for a mask configuration according to at least one embodiment of the present disclosure.
FIG. 4A illustrates a method for making a mask according to at least one embodiment of the present disclosure.
FIG. 4B illustrates a method for making a mask according to at least one embodiment of the present disclosure.
FIG. 4C illustrates a method for making a mask according to at least one embodiment of the present disclosure.
FIG. 5 illustrates a method for making a mask configuration according to at least one embodiment of the present disclosure.

### III. Summary

According to the invention, the problem is solved by the subject matter outlined in independent claim 1. The skilled person reading the following may note that certain disclosure which is marked as being proof of the invention, does not fall under the scope of the claims. To the extent that such a disparity exists, such the teachings are to be understood as supporting information for understanding the invention. The invention is defined by the claims alone. Advantageous further developments of the invention are set forth in the dependent claim.

### IV. Detailed Description

One or more embodiments of the present disclosure relate to utilizing one or more metal layers and/or metal masks independently or in conjunction with another mask or masks, including any antiviral masks, for example, any variation of a certified n95 mask. In one or more embodiments, the one or more metal layers and/or metal masks are made of a solid copper(Cu) material, including but not limited to pure copper or substantially pure copper (i.e. at least 50% copper), copper-oxide, or metal alloys that include copper, including being composed of an alloy combination that includes less than fifty percent copper. In one or more embodiments, the metal mask can be other metals or metal alloys that include one or more of copper, including copper derivatives such as brass or bronze, or zinc (Zn), tin (Sn), nickel (Ni), silver (Ag), gold (Au), iron (Fe), etc. In one or more embodiments, the metal layer 11a is an entirely metal or metal alloy-based mask. can be pure or substantially pure copper plate. In one or more embodiments, the metal layer or metal mask can be a mask composed of pure or substantially pure, solid and rigid copper metal. In one or more embodiments, the metal mask or metal layer can be made of rigid, ductile, or impressionable metal. In one or more embodiments, the metal mask or metal layer can be made entirely of or can partially include metal foil, including copper foil, aluminum foil, or any other metal or metal alloy foil. In one or more embodiments, the pure or substantially pure copper mask or copper layer can take the shape of the second, and in certain embodiments, underlying anti-viral mask with identical dimensions or substantially identical dimensions in each direction, e.g. in each of the vertical (y), horizontal(x), and z (e.g. in case of a protrusion in relation to a direction of the face of an individual wearing the metal and/or antiviral mask). In one or more embodiments, the metal mask or metal layer, e.g. copper mask or copper layer, can extend, for example, an additional half (0.5) a centimeters to five (5) centimeters in each direction in relation to the corresponding directions of the underlying anti-viral mask so as to completely enclose it.

In one or more embodiments, an insulating material, e.g. any polymer material, thermoset, thermoplastic, or any suitable electrical insulator, can be used on the inside of the metal layer or metal mask, e.g. the copper layer or the copper mask, to form an insulating layer in between the metal mask or metal layer and the underlying mask so as to minimize any impact that the metal, e.g. copper, has on materials with electrical effect, e.g. ionizing effect, in association with the underlying or second mask. In one or more embodiments, a copper foam, copper foil or copper textile material can be used to form another layer in between the insulating layer or in lieu of the insulating layer so as to add additional protection. In one or more embodiments, the metal layer or metal mask and any associated layers of the metal mask, e.g. insulating layer and/or copper foam and/or copper textile material, can have one or more holes that go through the entirety of the metal mask and its associated layers so as to permit greater air flow, where the underlying antiviral mask can compensate for any viral or other harmful material that passes therethrough.

In one or more embodiments, micro-holes can be formed on the metal layer or metal mask, e.g. the copper mask or copper layer, using any suitable manufacturing process steps, e.g. lasering, drilling, laser drilling, etc. The micro-holes can be formed with the size of viral particles in mind, e.g. smaller than viral or other harmful organisms or the carrier material, fluid, pathogens or substance that transmits viruses, pathogens or other harmful organisms.

In one or more embodiments, the metal mask or metal layer, e.g. the copper mask or copper layer, can have independent elastic strands or straps that are separate from the strands or straps of the underlying antiviral mask, and of the same or different material, where any elastic material, polymer material, rubber material, or any other suitable material that can form the strand or strap can be used. The elastic strand or strap can have an adjustable mechanism to tighten or loosen the fit around the face of the wearer, where the adjustable mechanism can be any suitable mechanism used for clothing, hats, masks, or other useful articles.

In one or more embodiments, the underlying antiviral mask can have two, three or four holes at its corners or substantially close to its corners and the metal mask or metal layer can have hooks or other suitable attachment mechanisms corresponding to each hole so as to attach the metal layer or mask to the underlying viral mask.

In one or more embodiments, the underlying antiviral mask can have no holes, but the metal mask or metal layer can have two or more hooks or other attachment mechanisms that latch in the mask by going underneath the mask (in contact with the user's face) and relying on the antiviral mask and the face of the user to maintain itself in place, where in one or more embodiments, a strand or strap may or may not be used in relation to the copper mask or copper layer. In one or more embodiments, the hooks or other attachment mechanism can be covered or layered with a material that will make it comfortable for the user to wear the metal mask or metal layer, such as copper, polyester, silk, any other suitable clothing material, or any material that corresponds to one of the layers of the underlying antiviral mask.

In one or more embodiments, various latching mechanisms can be used alone or in conjunction with one another to combine the metal mask or metal layer with the underlying antiviral mask.

In one or more embodiments, either the metal mask or metal layer or the underlying mask or layer can have a strapping or band mechanism that loops through holes of the mask without the strapping or banding mechanism to combine the masks and adjust the seal with respect to a user wearing the combination, e.g. such as a Velcro attachment mechanism.

In one or more embodiments, where the metal mask or metal layer is copper, when a virus or carrier mechanism with a virus contacts the mask, the nature of copper is antiviral, and the virus will have a shorter life span thereon as opposed to other surfaces. To the extent that any viral material passes through the metal layer or metal mask, e.g. in embodiments where the metal mask or layer is associated with holes to make breathing of the user easier, the underlying antiviral mask can provide additional protection.

In one or more embodiments, depending on the material, size and shape used for the underlying antiviral mask, the dimensions, density and thickness of the metal mask or metal layer can be adjusted accordingly, including with respect to embodiments where the metal mask or metal layer does not have an bands or strands to attach itself to a user.

In one or more embodiments, the metal mask or metal layer, e.g. copper mask or copper layer, can be used without the second, underlying mask, as metals with antiviral properties, e.g. copper, can offer protection without a secondary layer or secondary mask.

Accordingly, in one or more embodiments, the configuration of one or more embodiments of the present disclosure can reduce the impact of viral organisms coming into contact with the face of a user by having a first mask or layer that decreases the life-duration of any viral organisms attempting to come into contact with the user's face, and then the underlying, second, mask can intercept any remaining portions of viral material that attempt to come in contact with the user's face. In various embodiments, the use of a solid material, including a solid plate mask, completely solid and rigid metal mask, foil mask, or any combination of the same (e.g. multiple layers or multiple constituencies of a single layer) can offer superior protection from masks with metallic infusion as the entire surface area of the metal mask or metal layer will be associated with the material, e.g. copper, that has antiviral properties.

FIG. 1A illustrates a frontal view 100 of at least one embodiment of the present disclosure for a of a mask 50a and FIG. 1B illustrates a side cross-sectional view 110 of the at least one embodiment of the mask 50a. The antiviral mask 50a can include a first layer 11a that is composed primarily of metal or a metal alloy. In one or more embodiments, the first layer 11a is made of pure copper (i.e. at least ninety-percent copper) or substantially pure copper (i.e. at least fifty percent copper). In one or more embodiments, the metal layer 11a can be made of rigid, ductile, or impressionable metal. In one or more embodiments, the first layer 11a is made entirely of or primarily (e.g. the majority of the layer 11a, including the majority of its surface area) of pure copper or substantially pure copper plate with another metal. For example, the front portion of the first layer 11a can be copper plate (including the majority of the surface area of the frontal portion layer 11a) and another metal can be used to form the rest of the body of the first layer 11a, including but not limited to brass or bronze, zinc , tin, nickel , silver , gold , iron , etc. In one or more embodiments the layer 11a can be composed of an alloy combination that includes less than or more than fifty percent copper. In one or more embodiments, the first layer 11a can be entirely a metal foil, e.g. copper foil, or it can be partially metal foil and partially solid and rigid metal. The first layer 11a can be designed to be a mask with any shape associated with a facial mask or an existing or other suitable antiviral mask currently available in the market, and in one or more embodiments, as discussed in greater detail with respect to FIG. 1AAA and FIG. 1BBB, can cover the exposed portions of a user's face, e.g. the mouth and nose, e.g. the first layer 11a can be a stand-alone mask that can be used alone or in conjunction with mask 20. In one or more embodiments, the shape of the first layer 11a can take the same shape, with the same, substantially the same, or different dimensions as a second, underlying mask 20, e.g. a certified n95 mask.

In one or more embodiments, the dimensions of the first layer 11a can be adjusted in the x (horizontal), y (vertical), or z (from the perspective of the user's face in the event of a protrusion) direction as needed. For example, the first layer 11a can have the same dimensions as the underlying mask 20 so as to fit exactly over the underlying mask 20, or adjustments can be made, e.g. half (0.5) a centimeters to five (5) centimeters in each direction, such as to completely cover the underlying mask 20, while not contacting at least certain portions of the underlying mask 20. In one or more embodiments, the first layer 11a can cover less than the entire surface area of the underlying mask 20 and can be the same or different shape of the underlying mask 20, e.g. the meta layer 11a can be shaped as the underlying mask 20 and contiguously cover twenty to ninety-nine percent of the surface area of the underlying mask 20.

As shown, and according to one or more embodiments, the first layer 11a is associated with concaves 15a, 15b and protrusion 16, which corresponds to the shape of the underlying mask 20.

In one or more embodiments, the first layer 11a can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, and pursuant to one or more embodiments, the copper foil can be made using electrodeposition and/or rolling and/or any suitable shaping or molding technique. In the case where the first layer 11a is made of more than one metal or a metal foil and solid metal, any suitable manufacturing step can be used to combine the two materials, including welding and/or using a suitable adhesive. For example, when the first layer 11a is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 11a can be made using a three-dimensional printing process, where a technician utilizes the raw material or materials desired for the first layer 11a and set one or more three-dimensional printing machine to perform one or more steps to produce the first layer 11a with the shape and dimensions that are desired for a particular application. For example, the three dimensional printing process and associated three dimensional printing machines can be set to produce a solid copper mask, e.g. layer 11a, made of pure or substantially pure copper metal with dimensions that can completely cover mask 20, cover the majority of the surface area of mask 20, or otherwise cover exposed surfaces of a user's face, including the nose and mouth.

In one or more embodiments, and as shown, each of layer 11a (e.g. mask 11a) and mask 20 has bands or straps 9a, 9b, 9c, and 9d, e.g. elastic or adjustable bands or elastic or adjustable straps, for attaching around a user's head or over or under a user's ears. The bands or straps 9a, 9b, 9c, and 9d can be any suitable material including rubber, plastic, a polymer based material, a material that corresponds to one of the layers of mask 20, cloth, silk, or any other suitable material used for bands or straps for articles worn by user's, including masks. In one or more embodiments, the bands or straps 9a, 9b and 9c, 9d can each be one continuous band or separate bands on each end of their respective ends. The bands or straps 9a, 9b, 9c and 9d can be attached or part of their respective layers and/or masks, i.e. 11a and 20, using any suitable manufacturing or attachment process. Any suitable number of bands or straps and different materials can be used, and the above discussion is exemplary.

FIG. 1AA illustrates a frontal view 102 of at least one embodiment of the mask 50a with an alteration made to layer 11a. In one or more embodiments, one or more holes or openings can be made with respect to layer 11a so as to make breathing for a user easier. As shown, and pursuant to one or more embodiments, two holes or openings 30a, 30b are made substantially centered on the metal layer in relation to protrusion 16a. The openings 30a, 30b can be made using an suitable puncturing, drilling, or lasering operation on a metal layer 11a, resulting in metal layer 11z, or can be made by utilizing a three-dimensional printing device that is set to produce or yield metal layer 11z by way of initiating the three-dimensional printing operation or by taking additional manufacturing steps thereafter, e.g. drilling, lasering, or puncturing. In one or more embodiments, (not shown), the two holes or openings 30a, 30b of metal layer 11z can be made in relation to the concaves 15a, 15b, e.g. one or more holes on concave 15a and one or more holes on concave 15b, which can further minimize harmful viruses, pathogens or other materials from adversely impacting a user, as the concaves 15a, 15b can be in a path that is not directly associated with exposed portions of a user's face, such as the nostrils or mouth.

In one or more embodiments, the mask 20 can have a weight between .015 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 20 contacts a user's face. In one or more embodiments, the metal layer 11a (or metal layer 11z) can take the shape of a metal mask that covers the exposed portions of a user's face (e.g. the mouth and nose of a user) and can have a weight of .075 kilograms to two (2) kilograms and be between three (3) centimeters and forty (40) centimeters in the lateral (x) direction and vertical (y) direction, and with the protrusion extending one (1) centimeter to thirty (30) centimeters in the z-direction, as measured from the top or bottom most portion, in the vertical (y) direction of where the metal mask layer 11a, e.g. metal mask 11a, (or metal mask 11z or metal mask 11z) contacts the face of a user or the mask 20.

Fig. 1AAA illustrates at least one embodiment of a frontal view 104 of mask 50a on a face of a user 25. As shown, a user 25 can place and wear the mask 20 such that the user's nose 23 and the user's mouth 24 are covered by mask 20, and such that the metal layer 11a (in the form and shape of a facial mask) can cover all of mask 20 or a substantial surface area of mask 20, and by extension, also provide protection for the user's nose 23 and user's mouth 24. As shown, and according to one or more embodiments, each of mask 20 and layer 11a (or 11z) attaches to the user 25 with its respective straps 9a, 9b, 9c, and 9d.

FIG. 1B illustrates at least one embodiment of a side cross-sectional view 106 of mask 50a that includes metal layer 11a, and FIG. 1BB illustrates at least one embodiment of a side cross-sectional view 107 of mask 50a that includes metal layer 11z. As shown, FIG. 1B and FIG. 1BB illustrate at least one embodiment with a more detailed view of one or more embodiments for mask 20. In one or more embodiments, the underlying mask 20 can include one or more layers of material that together or in combination form a mask 20 of sufficient quality to prevent antiviral material from reaching a user's face. The underlying mask 20 can include any number of layers that are suitable and are useful alone or in combination to form an antiviral mask, including any suitable mask or layers of a mask suitable for an n95 or higher certification. In one or more embodiments, and by way of non-limiting example, the underlying mask can have an outer layer 1 of non-woven polypropylene , a second filler layer 3 of melt-blown non-woven polypropylene , a third layer 5 of supporting material such as modacrylic, and a fourth layer inner-layer of non-woven polypropylene 7. In one or more embodiments, the outer layer 1 can be spun-bond polypropylene, the second layer 3 can be a cellulose, polyester or cellulose and polyester hybrid, the third layer 5 can be a melt-blown polypropylene filter material and the fourth layer 7 can also be spun-bound polypropylene. Any other configuration of a known antiviral mask, with less or more layers and with different materials, including plastic layers, can be used for the underlying antiviral mask 20, and the description of this paragraph is exemplary.

FIG. 1BBB illustrates at least one embodiment of a side view 107 of mask 50a worn by a user 25. As shown, and according to one or more embodiments, the mask 20 and its associated layers covers the nose 23 and mouth 24 of a user 25, and the metal layer 11a takes the shape of a metal mask that can completely covers mask 20, and by extension, provides additional protection for a user. As stated and implied herein, and pursuant to one or more embodiments, metal layer 11z can be used in lieu of metal layer 11a, and can also take the shape of a metal mask that completely covers mask 20. Also as stated and implied herein, and pursuant to one or more embodiments, the metal layer 11a or metal layer 11z can cover a portion of mask 20 as opposed to completely covering mask 20 or completely encompassing mask 20, e.g. the metal layer 11a (or 11z) can cover a substantial surface area of the mask 20, e.g. more than fifty percent of the area and with a matching or different shape in relation to mask 20, including layer 11a or 11z having a matching shape of a facial mask that corresponds to the shape of mask 20.

In one or more embodiments, as stated and implied herein, metal layer 11a or metal layer 11z can take the shape of any facial mask, including as shown with the concaves 15a, 15b and protrusion 16a, and can be composed of solid copper metal, e.g. pure or substantially pure copper, and can be used independently of any underlying mask, e.g. by itself, as the metal material associated with the metal layer, e.g. mask, provides independent protection by virtue of its composition.

FIG. 1C illustrates at least one embodiment of a front view 120 of a mask 50b according to at least one embodiment of the present disclosure, and FIG. 1D illustrates at least one embodiment of a side cross-sectional view 130 of a mask 50b according to at least one embodiment of the present disclosure. In one or more embodiments, the mask 50b includes mask 20 as a second mask or underlying mask. In one or more embodiments, the mask 50b includes mask 28a, where, in one or more embodiments, mask 28a includes metal layer 11a (or metal layer 11z, which can include one or more holes as disclosed herein) and an additional layer 12. In various embodiments, metal layer 11a (or 11z) can be any type of layer as disclosed herein with reference to other embodiments, e.g. it can be any suitable metal, e.g. such as a solid and rigid, ductile, or impressionable metal and it can be composed of pure or substantially pure copper. In various embodiments, the additional layer 12 can be any one of any of the materials associated with mask 20 (including a polypropylene layer), another metal layer composed of the same or different materials as layer 11a, a thermoset, a thermoplastic, any other plastic, any electrical insulator material (including any suitable electrical insulation tape), any metal foam (including copper foam), any metal chain-link (including copper chain-link), metal foil (including copper foil) and any metal textile (including copper textile), any cloth, any cotton, any silk, or any other textile.

In one or more embodiments, any suitable technique can be used to shape and mold the second layer 12 to match the shape of the first layer 11a, including, as suitable for the particular material, rolling, annealing, hammering, sewing, drilling, laser drilling, cutting, sawing, molding, or any other suitable technique. In one or more embodiments, as is suitable for a particular material, one or more three-dimensional printing operations using one or more three-dimensional printing devices can be used to produce the second layer 12 such that the second layer 12 matches the shape and dimensions of the first layer 11a.

In one or more embodiments, the additional layer 12 is adhered onto the metal layer 11a using any suitable adhesive or welding technique, as is suitable for the materials used. For example, in the instance where layer 11a is a copper layer, depending on the material composition of the additional layer 12, the adhesive can be selected from at least one of one or more of any suitable epoxy, glue (including any suitable glue that contains one or more of a hane prepolymer, a diphenylmethane-diisocyanate, one or more isomers, and homologue), acrylic, cyanoacrylate, or any other suitable adhesive. By way of another example, when the second or additional layer 12 is insulating tape, the insulating tape can be shaped and taped to metal layer 11a using any suitable shaping, cutting, manufacturing, and attaching technique. In one or more embodiments, where a material from the above materials discussed with respect to additional layer 12 is a material that has electrically insulating properties, according to one or more embodiments, the additional layer 12 can offer an advantage when using mask 28a with mask 20 in that any layers in mask 20 that have its protection characteristics preserved when contacting mask 28a, e.g. as opposed to being in direct contact with metal, such as copper, and additionally, in the instances where metal 11a feels uncomfortable to a user, the insulating material may offer additional comfort, including in embodiments where mask 28a is used without mask 20.

In one or more embodiments (not shown), where the metal layer 11a includes one or more holes, e.g. 11z, the additional layer 12 can also include one or more holes (not shown) by using any suitable technique appropriate for the particular material used for additional layer 12, including lasering, drilling, puncturing, sewing, cutting, etc. Furthermore, according to one or more embodiments, and depending on the material used, one or more three-dimensional printing processes can be used so that the additional layer 12 has one or more holes that correspond to the one or more holes of layer 11z.

In one or more embodiments, the metal layer 21a can take a suitable mask shape such that mask 48a covers the exposed portions of a user's face (e.g. the mouth and nose of a user) and can the overall mask 21a can have a weight of .075 kilograms to two (2) kilograms and be between three (3) centimeters and forty (40) centimeters in the lateral (x) direction and vertical (y) direction. As stated and implied herein, and pursuant to one or more embodiments, metal layer 21a can take a shape that completely covers mask 48a. Also as stated and implied herein, and pursuant to one or more embodiments, the mask 21a can cover a portion of mask 48a as opposed to completely covering mask 48a or completely encompassing mask 48a, e.g. mask 21a can cover a substantial surface area of the mask 48a, e.g. more than fifty percent and with a matching or different shape in relation to mask 48a, including mask 21a having a matching shape of a facial mask that corresponds to the shape of mask 48a. The mask 21a can take any other suitable shape and have other suitable dimensions, including as disclosed herein with reference to other embodiments.

FIG.1E illustrates at least one embodiment of a front view 140 of a mask 50c according to at least one embodiment of the present disclosure, and FIG. 1F illustrates at least one embodiment of a side cross-sectional view 150 of a mask 50c according to at least one embodiment of the present disclosure. In one or more embodiments, the mask 50c includes mask 20 as a second mask or underlying mask. In one or more embodiments, the mask 50c includes mask 28b, where, in one or more embodiments, mask 28b includes metal layer 11a (or metal layer 11z, which can include one or more holes as disclosed herein), a second layer 12, and a third layer 13. Metal layer 11a can be made of any suitable metal, including as disclosed herein, such as a solid copper metal made of pure or substantially pure copper, and the second layer 12 and the third layer 13 can be any one of any of the materials associated with mask 20 (including a polypropylene layer), another metal layer composed of the same or different materials as layer 11a, a thermoset, a thermoplastic, any other plastic, any electrical insulator material (including any suitable electrical insulation tape), any metal foam (including copper foam), any metal chain-link (including copper chain-link), metal foil (including copper foil) and any metal textile (including copper textile), any cloth, any cotton, any silk, or any other textile. **In** various embodiments, the material associated with layer 12 can be the same or different than the material of layer 13.

In one or more embodiments, any suitable technique can be used to shape and mold the second layer 12 and the third layer 13 to match the shape of the metal layer 11a, including, as suitable for the particular material, rolling, annealing, hammering, sewing, drilling, laser drilling, cutting, sawing, molding, or any other suitable technique. **In** one or more embodiments, as is suitable for a particular material, one or more three-dimensional printing operations using one or more three-dimensional printing devices can be used to produce the second layer 12 and the third layer 13 such that the second layer 12 and the third layer 13 matches the shape and dimensions of the first layer 11a.

In one or more embodiments, the second layer 12 is adhered onto the metal layer 11a using any suitable adhesive or welding technique, as is suitable for the materials used, including as disclosed herein, and the third layer 13 is adhered onto the second layer 12 using any suitable adhesive or welding technique, as is suitable for the material used, including as disclosed herein. For example, in the instance where layer 11a is a copper layer, depending on the material composition of the additional layer 12, the adhesive can be selected from at least one of one or more of any suitable epoxy, glue (including any suitable glue that contains one or more of a hane prepolymer, a diphenylmethane-diisocyanate, one or more isomers, and homologue), acrylic, cyanoacrylate, or any other suitable adhesive. By way of another example, when the second or additional layer 12 is insulating tape, the insulating tape can be shaped and taped to metal layer 11a using any suitable shaping, cutting, manufacturing, and attaching technique. In one or more embodiments, where a material from the above materials discussed with respect to additional layer 12 is a material that has electrically insulating properties, according to one or more embodiments, the additional layer 12 can offer an advantage when using mask 28b with mask 20 in that any layers in mask 20 that have electrical characteristics can have those characteristics preserved when contacting mask 28, e.g. as opposed to being in direct contact with metal, such as copper, and additionally, in the instances where metal 11a feels uncomfortable to a user, the insulating material may offer additional comfort, including in embodiments where mask 28b is used without mask 20.

In one or more embodiments, the metal layer 11a can be a pure or substantially pure copper layer and layer 12 can be any suitable plastic or insulating material as disclosed herein, where layer 12 can be adhered onto layer 11a using a suitable adhesive, and layer 13 can be any suitable textile, including a metallic textile (such as a copper textile), silk, cotton, any other textile, or any of the materials associated with any one of the layers of mask 20, where layer 13 can be adhered onto layer 12 using any suitable adhesive as is applicable for the particular material combination, including as disclosed herein.

In one or more embodiments (not shown), where the metal layer 11a includes one or more holes, e.g. 11z, the second layer 12 and the third layer 13 can also include one or more holes (not shown) by using any suitable technique appropriate for the particular material used for the second layer 12 and the third layer 13, including lasering, drilling, puncturing, sewing, cutting, etc. Furthermore, according to one or more embodiments, and depending on the material used, one or more three-dimensional printing processes can be used so that the additional layer 12 and the additional layer 13 has one or more holes that correspond to the one or more holes of layer 11z.

In one or more embodiments (not shown), where the metal layer 11a includes one or more holes, e.g. 11z, the additional layer 12 can also include one or more holes (not shown) by using any suitable technique appropriate for the particular material used for additional layer 12, including lasering, drilling, puncturing, sewing, cutting, etc. Furthermore, according to one or more embodiments, and depending on the material used, one or more three-dimensional printing processes can be used so that the additional layer 12 has one or more holes that correspond to the one or more holes of layer 11z.

In one or more embodiments, the metal layer 11a (or metal layer 11z), layer 12, and layer 13 can all take a suitable mask shape such that mask 28b covers the exposed portions of a user's face (e.g. the mouth and nose of a user) and the overall mask 28b can have a weight of .075 kilograms to two (2) kilograms and be between three (3) centimeters and forty (40) centimeters in the lateral (x) direction and vertical (y) direction, and with the protrusion of the overall mask 28b extending one (1) centimeter to thirty (30) centimeters in the z-direction, as measured from the top or bottom most portion, in the vertical (y) direction of where layer 13 contacts the mask 20. As stated and implied herein, and pursuant to one or more embodiments, mask 28b can take a shape that completely covers mask 20. Also as stated and implied herein, and pursuant to one or more embodiments, the mask 28b can cover a portion of mask 20 as opposed to completely covering mask 20 or completely encompassing mask 20, e.g. mask 28b can cover a substantial surface area of the mask 20, e.g. more than fifty percent and with a matching or different shape in relation to mask 20, including each layer of mask 28b having a matching shape of a facial mask that corresponds to the shape of mask 20. The mask 28b can take any other suitable shape and have other suitable dimensions, including as disclosed herein with reference to other embodiments.

FIG.1G illustrates at least one embodiment of a front view 160 of a mask 50d according to at least one embodiment of the present disclosure, and FIG. 1H illustrates at least one embodiment of a side cross-sectional view 170 of a mask 50d according to at least one embodiment of the present disclosure. In one or more embodiments, an adhesive 40 is applied to the periphery 42 of the interior of metal layer 11a, where the metal layer 11a takes a shape that matches or substantially matches the mask 20, e.g. it is a metal mask 11a (or metal mask 11z in embodiments where it is desired to have holes associated with the metal portion of mask 50d) and mask 20 is connected to metal mask 11a by way of adhesion. In one or more embodiments, the first layer 1 of mask 20 is a polypropylene based layer, the adhesive 40 is an acrylic based adhesive and the metal layer 11a can take the shape, form, have the associated dimensions, and being composed of any suitable metal as disclosed herein, including as disclosed with respect to other embodiments or as otherwise suitable, e.g. in one or more embodiments, the layer 11a can be solid copper mask that is pure or substantially pure copper. In one or more embodiments, since the metal layer 11a is adhered onto mask 20, straps, e.g. 9a, 9b, can be omitted with respect to metal layer 11a. In one or more embodiments, the dimensions, thickness, and weight of metal layer 11a and the dimensions, weight, and thickness of the layers 1, 3, 5 and 7 of mask 20 can be adjusted based on the desired application, so as to ensure that mask 20 can sustain the weight of metal layer 11a.

In one or more embodiments, the mask 20 can have layers 1, 3, 5, and 7 as described with reference to FIG. 1B, and can have a weight between .15 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 20 contacts a user's face. In one or more embodiments, the metal layer 11a (or metal layer 11z) can have a weight of .075 kilograms to two (2) kilograms and with between three (3) centimeters and forty (40) centimeters in the lateral (x) direction and vertical (y) direction, and with the protrusion extending one (1) centimeter to thirty (30) centimeters in the z-direction, as measured from the top or bottom most portion, in the vertical (y) direction of where the metal layer 11a (or metal mask 11z) contacts the face of a user or the mask 20. In one or more embodiments, any other suitable adhesive can be used for adhesive 40, including as disclosed herein or as otherwise suitable, and can be altered based on the material make-up of or metal layer 11a and/or the nature and material make up of layer 1 and the underlying mask 20. As stated and implied herein, and pursuant to one or more embodiments, metal layer 11a can take a shape that matches and completely covers mask 20. In various embodiments, , the metal layer 11a can cover a portion of mask 20 as opposed to completely covering mask 20 or completely encompassing mask 20, e.g. metal layer 11a can cover a substantial surface area of the mask 20, e.g. more than fifty percent and with a matching or different shape, including a matching shape of a facial mask that corresponds to the shape of mask 20, where in various embodiments this can be achieved by, in addition to making dimensional alterations, adjusting the location of the adhesive 40 in relation to one or both of mask 20 and layer 11a (or layer 11z). The metal layer 11a can take any other suitable shape and have other suitable dimensions, including as disclosed herein with reference to other embodiments.

FIG.1I illustrates at least one embodiment of a front view 165 of a mask 50e according to at least one embodiment of the present disclosure, and FIG. 1J illustrates at least one embodiment of a side cross-sectional view 175 of a mask 50e according to at least one embodiment of the present disclosure. In one or more embodiments, the mask 50e includes mask 29a, which in turn includes metal layer 11a, plastic layer 47, and mask 20. In one or more embodiments, the metal layer 11a can be a solid mask made of pure or substantially pure copper. In one or more embodiments, the plastic molded layer 47 fits or snaps into the interior portion of metal layer 11a. In one or more embodiments, the plastic layer 47 is composed of any suitable plastic material and can be molded using any suitable manufacturing process, as outlined herein or otherwise suitable, so that an exterior portion of the plastic layer 47 hugs or fits into place to a periphery of metal layer 11a such that the plastic layer 47 is held in place by a snapping or fitting action. In one or more embodiments, the plastic layer 47 can be made to fit into place in relation to the metal layer 11a using one or more three-dimensional printing devices and by performing one or more three-dimensional printing operations. In one or more embodiments, the plastic layer 47 is adhered onto the metal layer 11a using any suitable adhesive, including an acrylic based adhesive. In one or more embodiments, the plastic layer 47 provides a layer of insulation between metal layer 11a and mask 20. In one or more embodiments (not shown), where metal layer 11a is associated with one or more holes, e.g. metal layer 11z, the plastic layer 47 can also be associated with one or more holes, including in one or more embodiments, where the one or more holes correspond to the holes of the metal layer 11z, and where in one or more embodiments, the one or more holes can be made using any suitable manufacturing process as described herein, including puncturing or drilling or by making adjustments to one or more three dimensional printing devices during one or more three dimensional printing operations to produce mask 47 with one or more holes.

In one or more embodiments, the metal layer 11a (or metal layer 11z) and plastic layer 47 can both take a suitable mask shape such that mask 29a covers the exposed portions of a user's face (e.g. the mouth and nose of a user) and the overall mask 50c can have a weight of .075 kilograms to two (2) kilograms and be between three (3) centimeters and forty (40) centimeters in the lateral (x) direction and vertical (y) direction, and with the protrusion of the overall mask 50c extending one (1) centimeter to thirty (30) centimeters in the z-direction, as measured from the top or bottom most portion, in the vertical (y) direction of where the layer 12 contacts the face of a user or the mask 20. As stated and implied herein, and pursuant to one or more embodiments, mask 29a can take a shape that completely covers mask 20. Also as stated and implied herein, and pursuant to one or more embodiments, the mask 29a can cover a portion of mask 20 as opposed to completely covering mask 20 or completely encompassing mask 20, e.g. mask 29a can cover a substantial surface area of the mask 20, e.g. more than fifty percent and with a matching or different shape in relation to mask 20, including that each layer of mask 29a having a matching shape of a facial mask that corresponds to the shape of mask 20. The mask 29a can take any other suitable shape and have other suitable dimensions, including as disclosed herein with reference to other embodiments, and in various embodiments, mask 29a can be used without mask 20.

FIG.1K illustrates at least one embodiment of a front view 180 of mask 50f, with an adjustment made to mask 11a, and according to at least one embodiment of the present disclosure, and FIG. 1L illustrates at least one embodiment of a side cross-sectional view 185 of a mask 50f according to at least one embodiment of the present disclosure. In one or more embodiments, one or more micro-holes 83 or micro-openings 83 is made in mask 11a to produce mask 11b. In one or more embodiments, the micro-holes 83 or micro-openings 83 can be made using any suitable laser drilling, other laser operations, electrochemical micromachining operation, or any other suitable micromachining operation or manufacturing technique. In one or more embodiments, as suitable, one or more three-dimensional printing operations using one or more three-dimensional printing operations can be utilized to produce the mask 11b. In one or more embodiments, the micro-holes 83 or micro-openings 83 can be between one and a one hundred micrometer with the spacing apart between the micro-holes being at least one and a quarter the size of the diameter of each micro-holes 83 or micro-opening. In various embodiments, the micro-holes 83 or micro-openings 83 can have a diameter opening between one micrometer and less than three micrometers, and can be spaced suitable apart such that pathogens, viruses, or carrier materials associated with the same cannot pass through mask 11b, e.g. a spacing of four micrometers or more apart. In one or more embodiment, viruses, bacterium, or their carrier mechanism can be three micrometers or greater and will not be able to pass through the mask 11b. In one or more embodiments, mask 11b can be used independently of an underlying mask 20, with the risks associated therewith further mitigated as a result of the micro-holes, and in various other embodiments, the mask 11b can be used with an underlying mask 20, including in embodiments with the shape and dimensions of mask 11b matching or substantially matching the underlying mask 20. In one or more embodiments, the mask 11b can be made of any suitable material, dimensions, and shape as disclosed herein with respect to other embodiments or otherwise suitable for a particular application, including the mask 11b being composed of pure or substantially pure copper. In one or more embodiments, instead of the metal layer 11b being a solid metal mask with micro-holes 84 or micro-openings 84, the metal layer 11b can be a mesh mask with holes or openings that correspond to what is currently used in windows, screen doors, etc., where the mesh mask can be an entirely metal mesh mask and can be a copper mesh mask of pure copper or substantially pure copper, and where the holes associated with the mesh can be adjusted based on the desired application.

FIG. 1M illustrates at least one embodiment of a front view 190 of a mask 50g according to at least one embodiment of the present disclosure, and FIG. 1N illustrates at least one embodiment of a side cross-sectional view 195 of a mask 50g according to at least one embodiment of the present disclosure. The embodiments associated with FIG. 1M and FIG. 1N are intended to expressly illustrate that, in accordance with the teachings of the present disclosure, the shape of a metallic based layer or metallic based mask can take different shapes than as expressly disclosed with respect to FIGs. 1A-L, and that in one or more embodiments where a second, underlying, antiviral mask is used in conjunction with the metallic based mask or metallic based layer, the second antiviral mask can also can take different shapes than as expressly disclosed with respect to FIGs. 1A-L.

The antiviral mask 50g can include a first layer 21a that is composed primarily of metal or a metal alloy. In one or more embodiments, the first layer 21a is made of pure copper or substantially pure copper. In one or more embodiments, the metal layer 21a can be made of rigid, ductile, or impressionable metal. In one or more embodiments, the first layer 21a is an entirely metal or metal alloy based. In one or more embodiments, the first layer 21a is made entirely of or primarily (e.g. the majority of the layer 21a, including the majority of its surface area) of pure copper or substantially pure copper plate with another metal. For example, the front portion of the first layer 21a can be copper plate (including the majority of the surface area of the frontal portion layer 21a) and another metal can be used to form the rest of the body of the first layer 21a, including but not limited to brass or bronze, zinc , tin, nickel , silver, gold, iron, etc. In one or more embodiments the layer 21a can be composed of an alloy combination that includes less than or more than fifty percent copper. In one or more embodiments, the first layer 21a can be entirely a metal foil, e.g. copper foil, or it can be partially metal foil and partially solid and rigid metal. The first layer 21a can be designed to be a mask with any shape associated with a facial mask or an existing or other suitable antiviral mask currently available in the market, and in one or more embodiments, can cover the exposed portions of a user's face, e.g. the mouth and nose, and can be a stand-alone mask that can be used independently of another mask. In one or more embodiments, the shape of the first layer 21a can take the same shape, with the same, substantially the same, or different dimensions as a second, underlying antiviral mask 48a, e.g. a certified n95 mask.

In one or more embodiments, the dimensions of the first layer 21a can be adjusted in the x (horizontal), y (vertical), or z (from the perspective of the user's face in the event of a protrusion) direction as needed. For example, the first layer 21a can have the same dimensions as the underlying mask 48a so as to fit exactly over the underlying mask 48a, or adjustments can be made, e.g. half (0.5) a centimeters to five (5) centimeters in each direction, such as to completely cover the underlying mask 48a, while not contacting at least certain portions of the underlying mask 48a. In one or more embodiments, the first layer 21a can cover less than the entire surface area of the underlying mask 48a and can be the same or different shape of the underlying mask 48a, e.g. the meta layer 21a can be shaped as the underlying mask 48a and contiguously cover twenty to ninety-nine percent of the surface area of the underlying mask 48a.

As shown, and pursuant to one or more embodiments, either one or both of the first layer 21a and the underlying mask 48a can take a flat shape with no or minimal protrusions protrusion such that by extending in the lateral and vertical direction one or both of the first layer 21a and the underlying mask 48a can cover the exposed portion of a user's face, e.g. the nose and mouth.

In one or more embodiments, the first layer 21a can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, and pursuant to one or more embodiments, the copper foil can be made using electrodeposition and/or rolling and/or any suitable shaping or molding technique. In the case where the first layer 21a is made of more than one metal or a metal foil and solid metal, any suitable manufacturing step can be used to combine the two materials, including welding and/or using a suitable adhesive. For example, when the first layer 21a is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 21a can be made using a three-dimensional printing process, where a technician utilizes the raw material or materials desired for the first layer 21a and can set one or more three-dimensional printing machine to perform one or more steps to produce the first layer 21a with the shape and dimensions that are desired for a particular application. For example, the three dimensional printing process and associated three dimensional printing machines can be set to produce a solid copper mask, e.g. layer 21a, made of pure or substantially pure copper metal with dimensions that can completely cover mask 48a, cover the majority of the surface area of mask 48a, or otherwise cover exposed surfaces of a user's face, including the nose and mouth.

In one or more embodiments, and as shown, each of layer 21a and mask 48a has bands or straps 18a, 18b, 18c, 18d, 18e, and 18f, e.g. elastic or adjustable bands or elastic or adjustable straps, for attaching around a user's head or over or under a user's ears. It is noted that three bands or straps are shown in FIG. 1M and FIG. 1N as a matter of perspective, and an additional band or strap (not shown) is present with respect to layer 21a and mask 48a. The bands or straps 18a, 18b, 18c, 18d, 18e, and 18f can be any suitable material including rubber, plastic, a polymer based material, a material that corresponds to one of the layers of mask 48a, cloth, silk, or any other suitable material used for bands or straps for articles worn by user's, including masks. In one or more embodiments, the bands or straps 18a, 18b, 18c, 18d, 18e, and 18f can each be one continuous band or separate bands on each end of their respective ends. The bands or straps 18a, 18b, 18c, 18d, 18e, and 18f can be attached or part of their respective masks, i.e. 21a and 48a, using any suitable manufacturing or attachment process. Any suitable number of bands or straps and different materials can be used, and the above discussion is exemplary.

In one or more embodiments, and by way of non-limiting example, the underlying mask 48a can have an outer layer 64a of non-woven polypropylene , a second filler layer 65b of melt-blown non-woven polypropylene , a third layer 67c of supporting material such as modacrylic, and a fourth layer inner-layer of non-woven polypropylene 70d. In one or more embodiments, the outer layer 64a can be spun-bond polypropylene, the second layer 65b can be a cellulose, polyester or cellulose and polyester hybrid, the third layer 67c can be a melt-blown polypropylene filter material and the fourth layer 70d can also be spun-bound polypropylene. Any other configuration of a known antiviral mask, with less or more layers and with different materials, including plastic layers, can be used for the underlying antiviral mask 48a, and the description of this paragraph is exemplary.

In one or more embodiments, as stated and implied herein, metal layer 21a or metal layer 11z can take the shape of any facial mask, including as shown with the concaves 15a, 15b and protrusion 16a, and can be composed of solid copper metal, e.g. pure or substantially pure copper, and can be used independently of any underlying mask, e.g. by itself, as the metal material associated with the metal layer, e.g. mask, provides independent protection by virtue of its composition.

In one or more embodiments, the mask 48a can have a weight between .015 kilograms to .5 kilograms and with dimensions between five (5) centimeters and twenty-five (25) centimeters in the lateral (x) direction and vertical (y) direction, of where the mask 20 contacts a user's face. In one or more embodiments, the metal layer 21a can take the shape of a metal mask that covers the exposed portions of a user's face (e.g. the mouth and nose of a user) and can have a weight of .075 kilograms to two (2) kilograms and be between three (3) centimeters and forty (40) centimeters in the lateral (x) direction and vertical (y) direction, where the metal mask layer 28a e.g. metal mask 11a, contacts the face of a user or the mask 20.

In various embodiments, the metal layer 28a, e.g. metal mask 28a, can have micro-holes, micro-openings, or other openings or holes as discussed herein with reference to other embodiments or as otherwise may be suitable.

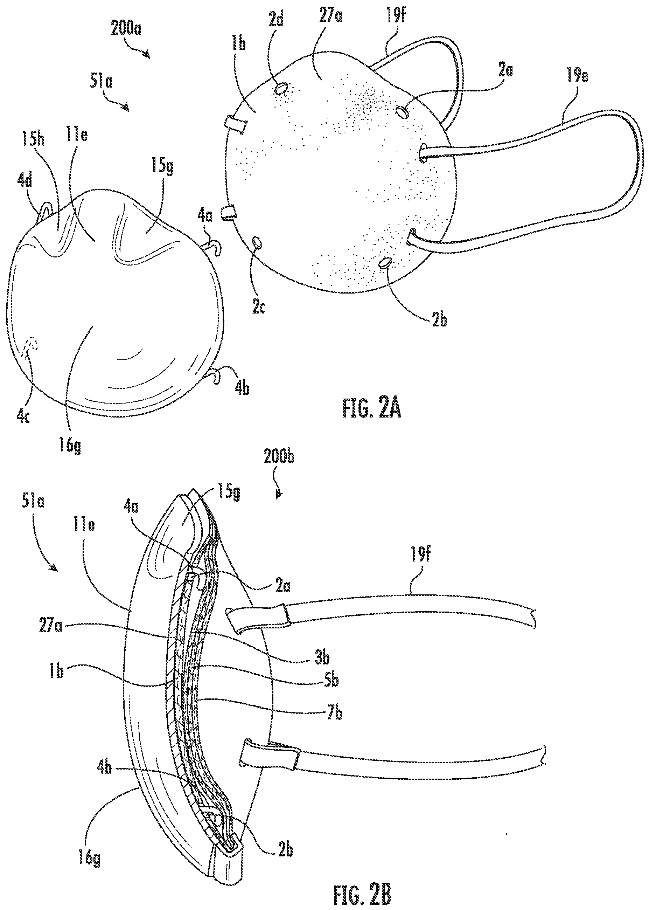

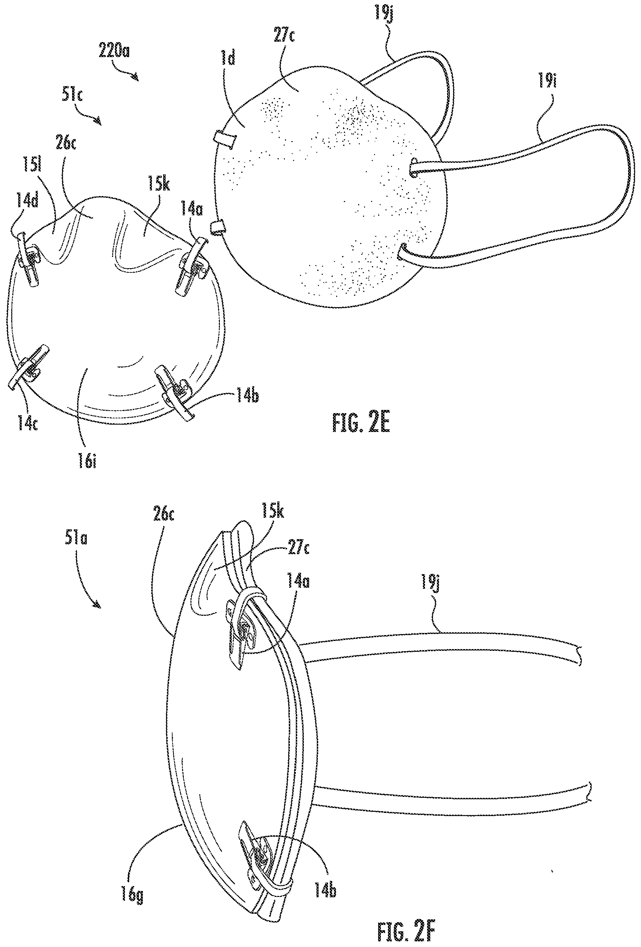

FIG. 2A illustrates at least one embodiment of a front view 200a of a mask 51a according to at least one embodiment of the present disclosure, and FIG. 2B illustrates at least one embodiment of a side cross-sectional view 200b of a mask 51a according to at least one embodiment of the present disclosure.

The mask 51a can include a first layer 11e that is composed primarily of metal. In one or more embodiments, the first layer 11e is made of pure copper or substantially pure copper. In one or more embodiments, the metal layer can be made of rigid, ductile, or impressionable metal. In one or more embodiments, the first layer 11e is made entirely of or primarily (e.g. the majority of the mask 11e or layer 11e), including the majority of the surface area) of pure copper or substantially pure copper plate with another metal. For example, the front portion of the first layer 11e can be copper plate (including the majority of the surface area of the frontal portion of the layer 11e) and another metal can be used to form the rest of the body of the first layer 11e, including but not limited to brass or bronze, zinc , tin, nickel, silver, gold, iron, etc. In one or more embodiments, the metal layer 11e is an entirely metal or metal alloy-based mask. In one or more embodiments, the first layer 11e can be entirely a metal foil, e.g. copper foil, or it can be partially metal foil and partially solid and rigid copper metal. The first layer 11e can be designed to be of any shape associated with a facial mask or an existing or other suitable antiviral mask currently available in the market, and can cover the exposed portions of a user's face, e.g. the mouth and nose. In one or more embodiments, the shape of the first layer 11e can take the same shape, with the same, substantially the same, or different dimensions as a second, underlying antiviral mask 27a, e.g. an n95 mask. The dimensions of the first layer 11e can be adjusted in the x (horizontal), y (vertical), or z (from the perspective of the user's face in the event of a protrusion) direction as needed. For example, the first layer 11e can have the same dimensions as the underlying mask 27a so as to fit exactly over the underlying mask 27a, or adjustments can be made, e.g. half (0.5) a centimeters to five (5) centimeters in each direction, such as to completely cover the underlying mask 27a, while not contacting at least certain portions of the underlying mask 27a.

As shown, and according to one or more embodiments, the first layer 11e is associated with concaves 15h, 15g and protrusion 16g, which corresponds to the shape of the underlying mask 27a.

In one or more embodiments, the first layer 11e can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, the copper foil can be made using electrodeposition and/or rolling and/or any suitable shaping or molding technique. In the case where the first layer 11e is made of more than one metal or a metal foil and solid metal, any suitable manufacturing step can be used to combine the two materials, including welding and/or using a suitable adhesive. For example, when the first layer 11e is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 11e can be made using a three-dimensional printing process, where a technician utilizes the raw material or materials desired for the first layer 11e and set one or more three-dimensional printing machine to perform one or more steps to produce the first layer 11e with the shape and dimensions that are desired for a particular application. For example, the three dimensional printing process and associated three dimensional printing machines can be set to produce a solid copper layer 11e made of pure or substantially pure copper metal with dimensions that can completely cover mask 27a, cover the majority of the surface area of mask 27a, or otherwise cover exposed surfaces of a user's face, including the nose and mouth.

In one or more embodiments, the underlying mask 27a can include one or more layers of material that together or in combination form a mask 27a of sufficient quality to prevent antiviral material from reaching a user's face. The underlying mask 27a can include any number of layers known to one in the ordinary skill of the art as useful alone or in combination to form an antiviral mask, including any suitable mask or layers of a mask currently with antiviral properties, e.g. a certified n95 mask. In one or more embodiments, and by way of non-limiting example, the underlying mask an outer layer 1b of non-woven polypropylene , a second filler layer 3b of melt-blown non-woven polypropylene , a third layer 5b of supporting material such as modacrylic, and a fourth layer inner-layer of non-woven polypropylene 7b. In one or more embodiments, the outer layer 1b can be spun-bond polypropylene, the second layer 3b can be a cellulose, polyester or cellulose and polyester hybrid, the third layer 5b can be a melt-blown polypropylene filter material and the fourth layer 7b can also be spun-bound polypropylene. Any other configuration of a known antiviral mask, with less or more layer and with different materials, including plastic layers, can be used for the underlying antiviral mask 27a, and the description of this paragraph is exemplary.

In one or more embodiments, metal layer 11e has one or more hooks 4a, 4b, 4c, and 4d, which corresponds to one or more holes or openings 2a, 2b, 2c, and 2d in relation to mask 27a. In one or more embodiments, as stated and implied herein, the metal layer 11e has one or more hooks 4a, 4b, 4c, and 4d and is shaped as a facial mask. In one or more embodiments, the one or more hooks 4a, 4b, 4c, and 4d can be metal hooks that correspond to the metal composition of the metal layer 11e. For example, in one or more embodiments, if the metal layer 11e is a copper mask, then the one or more hooks 4a, 4b, 4c, and 4d can similarly be copper hooks, where in one or more embodiments the copper hooks 4a, 4b, 4c, and 4d can be welded or adhered onto the metal layer 11e using any suitable adhesive as disclosed herein or otherwise suitable, e.g. an acrylic adhesive, or the copper hooks 4a, 4b, 4c, and 4d can be otherwise attached to the metal layer 11e using any other suitable manufacturing process or technique, including using one or more three-dimensional printing operations with one or more three-dimensional printing devices to produce the metal layer 11e with the hooks 4a, 4b, 4c, and 4d. In one or more embodiments, the one or more hooks can 4a, 4b, 4c, or 4d can be any other suitable metal or material, including a plastic material, and can be attached to the metal layer 11e using any suitable technique, including any suitable adhesive disclosed herein or otherwise suitable for adhering the desired material onto the metal layer 11e.

In one or more embodiments, the one or more holes 2a, 2b, 2c, and 2d of mask 27a can be through all of the layers of mask 27a or solely through the first layer 1b, and can be made using any suitable manufacturing technique, including puncturing, cutting, etc.

In one or more embodiments, if the dimensions or shape of metal layer 11e are adjusted so as not to match the shape or dimensions of mask 27a or fully encompass mask 27a, then the hooks 4a, 4b, 4c, and 4d and the holes 2a, 2b, 2c, and 2d can also be adjusted so that metal layer 11e can fit into mask 27a.

In one or more embodiments, and as shown, mask 27a has bands or straps 19f and 19e, e.g. elastic or adjustable bands or elastic or adjustable straps, for attaching around a user's head or over or under a user's ears. The elastic bands or straps 19f and 19e can be any suitable material including rubber, plastic, a polymer based material, a material that corresponds to one of the layers of mask 27a, cloth, silk, or any other suitable material used for bands or straps for articles worn by user's, including masks. In one or more embodiments, the bands or straps 19f and 19e can each be one continuous band or separate bands on each end of their respective ends. The bands or straps 19f and 19e can be attached to mask 27a using any suitable manufacturing or attachment process. In one or more embodiments, the hooks of metal layer 11e are inserted into the holes or openings 2a, 2b, 2c, or 2d and mask 27a supports metal layer 11e such that the bands or straps 19f and 19a attach mask 27a to a user, and by extension, mask 51a to a face of a user.

In one or more embodiments, the mask 27a can have a weight between .15 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 27a contacts a user's face. In one or more embodiments, the metal layer 11e can have a weight of .075 kilograms to two (2) kilograms and with between three (3) centimeters and forty (40) centimeters in the lateral (x) direction and vertical (y) direction, and with the protrusion extending one (1) centimeter to thirty (30) centimeters in the z-direction, as measured from the top or bottom most portion, in the vertical (y) direction of where the metal layer 11e contacts the face of a user or the mask 27a. In one or more embodiments, the weight and dimensions of the metal layer 11e are selected so as to be supportable by mask 27a, where in one or more embodiments the weights and dimensions of metal layer 11e can be any suitable weight and dimensions for a metal mask as disclosed herein, and where in one or more embodiments the weight of metal layer 11e can be less than half the weight of mask 27a.

In one or more embodiments, the metal layer 11e can, in addition to having the hooks 4a, 4b, 4c, and 4f, otherwise take the shape, form, weight, have the associated dimension of, and be made of materials associated with other masks as disclosed herein, including but not limited to metal layer 11a, 11b, and 11z.

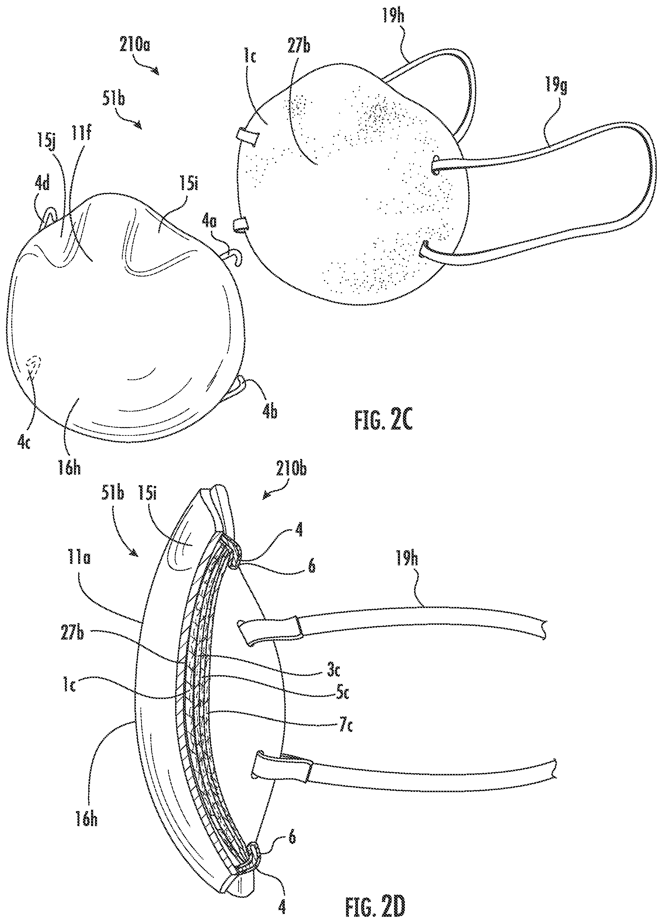

FIG. 2C illustrates at least one embodiment of a front view 210a of a mask 51b according to at least one embodiment of the present disclosure, and FIG. 2D illustrates at least one embodiment of a side cross-sectional view 210b of a mask 51b according to at least one embodiment of the present disclosure.

The antiviral mask 51b can include a first layer 11f that is composed primarily of metal. In one or more embodiments, the first layer 11f is made of pure copper or substantially pure copper. In one or more embodiments, the metal layer can be made of rigid, ductile, or impressionable metal. In one or more embodiments, the first layer 11f is made entirely of or primarily (e.g. the majority of layer 11f), including the majority of the surface area) of pure copper or substantially pure copper plate with another metal. For example, the front portion of the first mask 11f or first layer 11f can be copper plate (including the majority of the surface area of the frontal portion of the mask 11f or layer 11f) and another metal can be used to form the rest of the body of the first mask 11f or first layer 11f, including but not limited to brass or bronze, zinc , tin, nickel , silver , gold , iron , etc. In one or more embodiments, the metal layer 11f is an entirely metal or metal alloy-based mask. In one or more embodiments, the first layer 11f can be entirely a metal foil, e.g. copper foil, or it can be partially metal foil and partially solid and rigid metal. The first layer 11f can be designed to be of any shape associated with a facial mask or an existing or other suitable antiviral mask currently available in the market, and in one or more embodiments, can cover the exposed portions of a user's face, e.g. the mouth and nose. In one or more embodiments, the shape of the first layer 11f can take the same shape, with the same or substantially the same dimensions as a second, underlying antiviral mask 27b, e.g. an n95 mask. For example, the first layer 11f can have the same dimensions as the underlying mask 27b so as to fit exactly over the underlying mask 27b.

As shown, and according to one or more embodiments, the first mask 11f or first layer 11f is associated with concaves 15i, 15j and protrusion 16h, which corresponds to the shape of the underlying mask 27b.

In one or more embodiments, the first layer 11f can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, the copper foil can be made using electrodeposition and/or rolling and/or any suitable shaping or molding technique. In the case where the first layer 11f is made of more than one metal or a metal foil and solid metal, any suitable manufacturing step can be used to combine the two materials, including welding and/or using a suitable adhesive. For example, when first layer 11f is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 11f can be made using a three-dimensional printing process, where a technician utilizes the raw material or materials desired for the first layer 11f and set one or more three-dimensional printing machines to perform one or more steps to produce the first layer 11f with the shape and dimensions that are desired for a particular application. For example, the three dimensional printing process and associated three dimensional printing machines can be set to produce a solid or copper layer 11f made of pure or substantially pure copper metal with dimensions that can completely cover mask 27b, cover the majority of the surface area of mask 27b, or otherwise cover exposed surfaces of a user's face, including the nose and mouth.

In one or more embodiments, the underlying mask 27b can include one or more layers of material that together or in combination form a mask 27b of sufficient quality to prevent antiviral material from reaching a user's face. The underlying mask 27b can include any number of layers known to one in the ordinary skill of the art as useful alone or in combination to form an antiviral mask, including any suitable mask or layers of a mask currently offered in the marketplace, and including antiviral masks with an n9d certification. In one or more embodiments, and by way of non-limiting example, the underlying mask an outer layer 1c of non-woven polypropylene , a second filler layer 3c of melt-blown non-woven polypropylene, a third layer 5c of supporting material such as modacrylic, and a fourth layer inner-layer of non-woven polypropylene 7c. In one or more embodiments, the outer layer 1c can be spun-bond polypropylene, the second layer 3c can be a cellulose, polyester or cellulose and polyester hybrid, the third layer 5c can be a melt-blown polypropylene filter material and the fourth layer 7c can also be spun-bound polypropylene. Any other configuration of a known antiviral mask, with less or more layer and with different materials, including plastic layers, can be used for the underlying antiviral mask 27b, and the description of this paragraph is exemplary.

In one or more embodiments, metal layer 11f has one or more hooks 4a, 4b, 4c, and 4d. In one or more embodiments, the one or more hooks 4a, 4b, 4c, and 4d can be metal hooks that correspond to the metal composition of the metal layer 11f. For example, in one or more embodiments, if the metal layer 11f is a copper mask or layer, then the one or more hooks 4a, 4b, 4c, and 4d can similarly be copper hooks, where in one or more embodiments the copper hooks 4a, 4b, 4c, and 4d can be welded or adhered onto the metal layer 11f using any suitable adhesive as disclosed herein or otherwise suitable, e.g. an acrylic adhesive, or the copper hooks 4a, 4b, 4c, and 4d can be otherwise attached to the metal layer 11f using any other suitable manufacturing process or technique, including using one or more three-dimensional printing operations with one or more three-dimensional printing devices to produce the metal layer 11f with the hooks 4a, 4b, 4c, and 4d. In one or more embodiments, the one or more hooks can 4a, 4b, 4c, or 4d can be any other suitable metal or material, including a plastic material, and can be attached to the metal layer 11f using any suitable technique, including any suitable adhesive disclosed herein or otherwise suitable for adhering the desired material onto the metal layer 11f.

In one or more embodiments, the metal hooks 4a, 4b, 4c, and 4d can hook behind the mask 27b without any holes being associated with mask 27b, e.g. the hooks 4a, 4b, 4c, and 4d can hook behind the final layer of mask 27b, e.g. layer 7c, attach itself to the mask 27b by a hooking action. In one or more embodiments, the hooks 4a, 4b, 4c, and 4d can be malleable and/or ductile or otherwise be adjustable so as to allow the user to adjust the metal layer 11f to the mask 27b by applying pressure, e.g. squeezing down, on the hooks 4a, 4b, 4c, and 4d. In one or more embodiments, the material associated with 4a, 4b, 4c, and 4d can be selected and/or treated by one or more processes as described herein or otherwise suitable so as to make the hooks 4a, 4b, 4c, and 4d adjustable as described herein. In one or more embodiments, a material 6, such as cotton, silk, or any other suitable textile, including a metallic textile, can be used and attached to the hooks 4a, 4b, 4c, and 4d, e.g. by use of a suitable adhesive or by any other suitable technique, so as to make the contact with a user's face more comfortable.

In one or more embodiments, and as shown, mask 27b has bands or straps 19g and 19h, e.g. elastic or adjustable bands or elastic or adjustable straps, for attaching around a user's head or over or under a user's ears. The bands or straps 19g and 19h can be any suitable material including rubber, plastic, a polymer based material, a material that corresponds to one of the layers of mask 27b, cloth, silk, or any other suitable material used for bands or straps for articles worn by user's, including masks. In one or more embodiments, the bands or straps 19g and 19h can each be one continuous band or separate bands on each end of their respective ends. The elastic bands or straps 19f and 19e can be attached to mask 27b using any suitable manufacturing or attachment process. In one or more embodiments, the weight and dimensions of the metal layer 11f are selected so as to be supportable by mask 27b, where in one or more embodiments the weights and dimensions of metal layer 11f are any suitable weight and dimensions for a metal mask as disclosed herein, and where in one or more embodiments the weight of layer 11f can be half the weight of mask 27b.

In one or more embodiments, the mask 27b can have a weight between .15 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 20 contacts a user's face. In one or more embodiments, the metal layer 11f can have a weight of .075 kilograms to two and match or substantially match the dimensions of mask 20. In one or more embodiments, the weight and dimensions of the metal layer 11f are selected so as to be supportable by mask 27b, where in one or more embodiments the weights and dimensions of metal layer 11f are any suitable weight and dimensions for a metal mask as disclosed herein, and where in one or more embodiments the weight of metal mask 11f can be less than half the weight of metal mask 27b.

In one or more embodiments, where it is desired for metal layer 11f to have different dimensions and/or a different shape than mask 27b, the number and/or location of the hooks 4a, 4b, 4c, and 4d can be adjusted to make such an accommodation, e.g. only two hooks can be used where, for example, a smaller layer 11f is desired in relation to mask 27b, with the weight of layer 11f also adjustable to make the accommodation.

In one or more embodiments, the metal layer 11f can, in addition to having the hooks 4a, 4b, 4c, and 4f, otherwise take the shape, form, weight, have the associated dimension of, and be made of materials associated with other masks as disclosed herein, including but not limited to metal layer 11a, 11b, and 11z.

FIG. 2E illustrates at least one embodiment of a front view 220a of a mask 51c according to at least one embodiment of the present disclosure, and FIG. 2D illustrates at least one embodiment of a side cross-sectional view 220b of a mask 51c according to at least one embodiment of the present disclosure.

The antiviral mask 51c can include a first layer 26c that is composed primarily of metal. In one or more embodiments, the first layer 26c is made of pure copper or substantially pure copper. In one or more embodiments, the metal layer can be made of rigid, ductile, or impressionable metal. In one or more embodiments, the first layer 26c is made entirely of or primarily (e.g. the majority of layer 26c), including the majority of the surface area) of pure copper or substantially pure copper plate with another metal. For example, the front portion of the first layer 26c can be copper plate (including the majority of the surface area of the frontal portion of layer 26c) and another metal can be used to form the rest of the body of first layer 26c, including but not limited to brass or bronze, zinc , tin, nickel , silver , gold , iron, etc. In one or more embodiments, the first layer 26c can be entirely a metal foil, e.g. copper foil, or it can be partially metal foil and partially solid and rigid metal. The first layer 26c can be designed to be of any shape associated with a facial mask or an existing or other suitable antiviral mask currently available in the market, and in one or more embodiments, can cover the exposed portions of a user's face, e.g. the mouth and nose. In one or more embodiments, the shape of the first layer 26c can take the same shape, with the same or substantially the same dimensions as a second, underlying antiviral mask 27c, e.g. an n95 mask. For example, the first layer 26c can have the same dimensions as the underlying mask 27c so as to fit exactly over the underlying mask 27c.

As shown, and according to one or more embodiments, the first layer 26c is associated with concaves 151, 15k and protrusion 16i, which corresponds to the shape of the underlying mask 27c.

In one or more embodiments, the first layer 26c can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, the copper foil can be made using electrodeposition and/or rolling and/or any suitable shaping or molding technique. In the case where the first layer 26c is made of more than one metal or a metal foil and solid metal, any suitable manufacturing step can be used to combine the two materials, including welding and/or using a suitable adhesive. For example, when first layer 26c is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 26c can be made using a three-dimensional printing process, where a technician utilizes the raw material or materials desired for the first layer 26c and set one or more three-dimensional printing machines to perform one or more steps to produce the first layer 26c with the shape and dimensions that are desired for a particular application. For example, the three dimensional printing process and associated three dimensional printing machines can be set to produce a solid or copper layer 26c made of pure or substantially pure copper metal with dimensions that can completely cover mask 27c, cover the majority of the surface area of mask 27c, or otherwise cover exposed surfaces of a user's face, including the nose and mouth.

In one or more embodiments, the underlying mask 27c can include one or more layers of material that together or in combination form a mask 27c of sufficient quality to prevent antiviral material from reaching a user's face. The underlying mask 27c can include any number of layers known to one in the ordinary skill of the art as useful alone or in combination to form an antiviral mask, including any suitable mask or layers of a mask currently offered in the marketplace, and including antiviral masks with an n9d certification. In one or more embodiments, the underlying mask 27c can include a polypropylene based layer 1d, and can

In one or more embodiments, metal layer 26c has snapping mechanisms 14a, 14b, 14c, and 14d. In one or more embodiments, the one or more snapping mechanisms 14a, 14b, 14c, and 14d can include metal portions that correspond to the metal composition of the metal layer 26c. For example, in one or more embodiments, if the metal layer 26c is a copper mask or layer, then the snapping mechanisms 14a, 14b, 14c, and 14d can similarly include copper portions, where in one or more embodiments the snapping mechanisms 14a, 14b, 14c, and 14d can be welded or adhered onto the metal layer 26c using any suitable adhesive as disclosed herein or otherwise suitable, e.g. an acrylic adhesive, or the snapping mechanisms 14a, 14b, 14c, and 14d can be otherwise attached to the metal layer 26c using any other suitable manufacturing process or technique, including using one or more three-dimensional printing operations with one or more three-dimensional printing devices to produce the metal layer 26c with the snapping mechanisms 14a, 14b, 14c, and 14d. In one or more embodiments, the one or more snapping mechanisms 14a, 14b, 14c, and 14d can include any other suitable metal or material, including a plastic material, and can be attached to the metal layer 26c using any suitable technique, including any suitable adhesive disclosed herein or otherwise suitable for adhering the desired material onto the metal layer 26c.

In one or more embodiments, the metal snapping mechanisms 14a, 14b, 14c, and 14d can snap and close behind mask 27c without any holes being associated with mask 27c, e.g. the snapping mechanisms 14a, 14b, 14c, and 14d attach itself to the mask 27c by a snapping action that snaps the metal layer 26c in place to the mask 27c In one or more embodiments, a material (not expressly shown), such as cotton, silk, or any other suitable textile, including a metallic textile, can be used and attached to the portion of the snapping mechanisms that contact a user's face, e.g. by use of a suitable adhesive or by any other suitable technique, so as to make the contact with a user's face more comfortable.

In one or more embodiments, and as shown, mask 27c has bands or straps 19j and 19i, e.g. elastic or adjustable bands or elastic or adjustable straps, for attaching around a user's head or over or under a user's ears. The bands or straps 19j and 19i can be any suitable material including rubber, plastic, a polymer based material, a material that corresponds to one of the layers of mask 27c, cloth, silk, or any other suitable material used for bands or straps for articles worn by user's, including masks. In one or more embodiments, the bands or straps 19g and 19h can each be one continuous band or separate bands on each end of their respective ends. The elastic bands or straps 19j and 19i can be attached to mask 27c using any suitable manufacturing or attachment process. In one or more embodiments, the weight and dimensions of the metal layer 26c are selected so as to be supportable by mask 27c, where in one or more embodiments the weights and dimensions of metal layer 26c are any suitable weight and dimensions for a metal mask as disclosed herein, and where in one or more embodiments the weight of metal layer 26c can be less than half the weight of mask 27c.

In one or more embodiments, the mask 27c can have a weight between .15 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 20 contacts a user's face. In one or more embodiments, the metal layer 26c can have a weight of .075 kilograms to two and match or substantially match the dimensions of mask 20. In one or more embodiments, the weight and dimensions of the metal layer 26c are selected so as to be supportable by mask 27c, where in one or more embodiments the weights and dimensions of metal layer 26c are any suitable weight and dimensions for a metal mask as disclosed herein, and where in one or more embodiments the weight of metal layer 26c can be less than half the weight of metal mask 27c.

In one or more embodiments, the metal layer 26c can, in addition to having the snapping mechanisms 14a, 14b, 14c, and 14d, otherwise take the shape, form, weight, have the associated dimension of, and be made of materials associated with other masks as disclosed herein, including but not limited to metal layer 11a, 11b, and 11z.

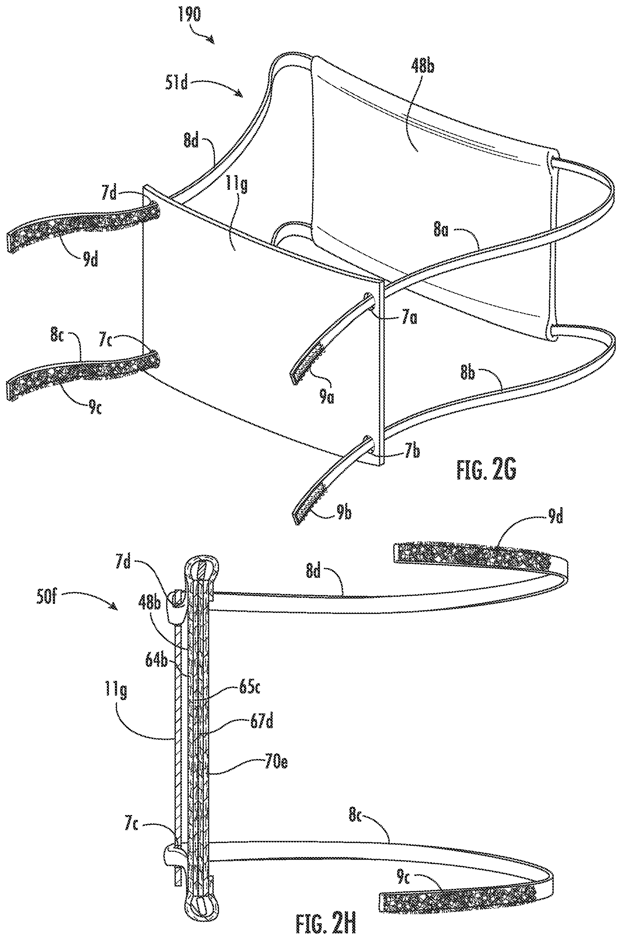

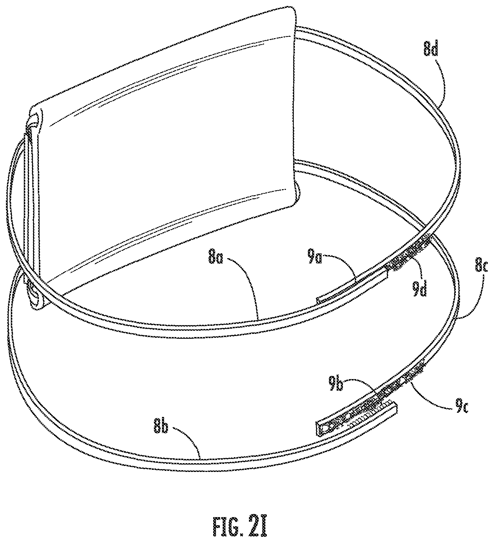

FIG. 2G illustrates at least one embodiment of a front view 230a of a mask 51f according to at least one embodiment of the present disclosure, FIG. 2H illustrates at least one embodiment of a side cross-sectional view 230b of a mask 51f according to at least one embodiment of the present disclosure, and FIG. 2I illustrates at least one embodiment of a rear view 230c of a mask 51f according to at least one embodiment of the present disclosure.

The antiviral mask 51f can include a first layer 11g that is composed primarily of metal or a metal alloy. In one or more embodiments, the first layer 11g is made of pure copper or substantially pure copper. In one or more embodiments, the metal layer 11g can be made of rigid, ductile, or impressionable metal. In one or more embodiments, the first layer 11g is made entirely of or primarily (e.g. the majority of the layer 11g, including the majority of its surface area) of pure copper or substantially pure copper plate with another metal. For example, the front portion of the first layer 11g can be copper plate (including the majority of the surface area of the frontal portion layer 11g) and another metal can be used to form the rest of the body of the first layer 11g, including but not limited to brass or bronze, zinc , tin, nickel , silver , gold , iron , etc. In one or more embodiments the layer 11g can be composed of an alloy combination that includes less than or more than fifty percent copper. In one or more embodiments, the first layer 11g can be entirely a metal foil, e.g. copper foil, or it can be partially metal foil and partially solid and rigid metal. The first layer 11g can be designed to be a mask with any shape associated with a facial mask or an existing or other suitable antiviral mask currently available in the market, and in one or more embodiments, can cover the exposed portions of a user's face, e.g. the mouth and nose, and can be a stand-alone mask that can be used independently of another mask. In one or more embodiments, the shape of the first layer 11g can take the same shape, with the same, substantially the same, or different dimensions as a second, underlying antiviral mask 48b, e.g. a certified n95 mask.

In one or more embodiments, the dimensions of the first layer 11g can be adjusted in the x (horizontal), y (vertical), or z (from the perspective of the user's face in the event of a protrusion) direction as needed. For example, the first layer 11g can have the same dimensions as the underlying mask 48b so as to fit exactly over the underlying mask 48b, or adjustments can be made, e.g. half (0.5) a centimeters to five (5) centimeters in each direction, such as to completely cover the underlying mask 48b, while not contacting at least certain portions of the underlying mask 48b. In one or more embodiments, the first layer 11g can cover less than the entire surface area of the underlying mask 48b and can be the same or different shape of the underlying mask 48b, e.g. the meta layer 11g can be shaped as the underlying mask 48b and contiguously cover twenty to ninety-nine percent of the surface area of the underlying mask 48b.

As shown, and pursuant to one or more embodiments, either one or both of the first layer 11g and the underlying mask 48b can take a flat shape with no or minimal protrusions protrusion such that by extending in the lateral and vertical direction one or both of the first layer 11g and the underlying mask 48b can cover the exposed portion of a user's face, e.g. the nose and mouth.

In one or more embodiments, the first layer 11g can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, and pursuant to one or more embodiments, the copper foil can be made using electrodeposition and/or rolling and/or any suitable shaping or molding technique. In the case where the first layer 11g is made of more than one metal or a metal foil and solid metal, any suitable manufacturing step can be used to combine the two materials, including welding and/or using a suitable adhesive. For example, when the first layer 11g is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 11g can be made using a three-dimensional printing process, where a technician utilizes the raw material or materials desired for the first layer 11g and can set one or more three-dimensional printing machine to perform one or more steps to produce the first layer 11g with the shape and dimensions that are desired for a particular application. For example, the three dimensional printing process and associated three dimensional printing machines can be set to produce a solid copper mask, e.g. layer 11g, made of pure or substantially pure copper metal with dimensions that can completely cover mask 48b, cover the majority of the surface area of mask 48b, or otherwise cover exposed surfaces of a user's face, including the nose and mouth.

In one or more embodiments, and by way of non-limiting example, the underlying mask 48b can have an outer layer 64b of non-woven polypropylene , a second filler layer 65c of melt-blown non-woven polypropylene , a third layer 67d of supporting material such as modacrylic, and a fourth layer inner-layer of non-woven polypropylene 70e. In one or more embodiments, the outer layer 64b can be spun-bond polypropylene, the second layer 65c can be a cellulose, polyester or cellulose and polyester hybrid, the third layer 67d can be a melt-blown polypropylene filter material and the fourth layer 70e can also be spun-bound polypropylene. Any other configuration of a known antiviral mask, with less or more layers and with different materials, including plastic layers, can be used for the underlying antiviral mask 48b, and the description of this paragraph is exemplary.

In one or more embodiments, the mask 48b can have a weight between .015 kilograms to .5 kilograms and with dimensions between five (5) centimeters and twenty-five (25) centimeters in the lateral (x) direction and vertical (y) direction, of where the mask 20 contacts a user's face. In one or more embodiments, the metal layer 11g can take the shape of a metal mask that covers the exposed portions of a user's face (e.g. the mouth and nose of a user) and can have a weight of .075 kilograms to two (2) kilograms and be between three (3) centimeters and forty (40) centimeters in the lateral (x) direction and vertical (y) direction, where the metal mask layer 28a e.g. metal mask 11a, contacts the face of a user or the mask 20.

In one or more embodiments, and as shown, the mask 48b has bands or straps 8a, 8b, 8c, and 8d e.g. elastic or adjustable bands or elastic or adjustable straps, for attaching around a user's head or over or under a user's ears. The bands or straps 8a, 8b, 8c, and 8d can be any suitable material including rubber, plastic, a polymer based material, a material that corresponds to one of the layers of mask 48b, cloth, silk, or any other suitable material used for bands or straps for articles worn by user's, including masks. In various embodiments, the bands or straps 8a, 8b, 8c, and 8d are associated with connecting mechanisms 9a, 9b, 9c, and 9d that can connect the mask 48b and metal layer 11g to the back of a head of a use, In various embodiments, the mechanisms 9a, 9b, 9c, and 9d are a Velcro mechanism that attaches mask 48b and layer 11g together. In various embodiments, mechanisms 9a, 9b at the ends of 8a, 8b are associated with hooks made of polyester or nylon and mechanisms 9c, 9d at the ends of 8a, 8b are smaller hooks than the hooks of 9a, 9b and also made of polyester or nylon, where the mechanisms 9a, 9b attach to mechanisms 9c, 9d to bring mask 48b and layer 11g together. The connection mechanisms 9a, 9b, 9c and 9d are exemplary, and any other connection mechanism, including snaps with holes, connections mechanisms with a male insertion and female opening, or any other connection mechanisms used for hats, masks, clothing, or other articles can be used.

In one or more embodiments, metal layer 11g has one or more holes 7a, 7b, 7c, and 7d such that bands or straps 8a, 8b, 8c, and 8d insert therethrough in order to connect mask 48b and layer 11g together with connection mechanisms 9a, 9b, 9c, and 9d. In various embodiments, as stated and implied herein, the straps or bands are adjustable to tighten the overall mask 51f in place. In one or more embodiments, holes 7a, 7b, 7c, and 7d can be made using any other suitable manufacturing process or technique, including puncturing, drilling, or lasering operation, or using one or more three-dimensional printing operations with one or more three-dimensional printing devices to produce the metal layer 11g with holes 7a, 7b, 7c, and 7d.

In one or more embodiments, metal layer 11g and mask 48b can take different shapes and be made of different materials, including being masks with different dimensions and protrusions. In various embodiments, metal layer 11g can take the shape, form, have associated and dimensions, and be composed of any suitable materials, including but not limited to as described with respect to layers 11a, 11z, and 11b. In one or more embodiments, mask 48b can shape, form, have associated and dimensions of any suitable mask, including but not limited to as described with respect to mask 20.

In one or more embodiments the configuration of FIGs 2G-I can be adjusted so that the holes are associated with the mask 48b and metal layer 11 can be associated with the connection straps or bands to bring the mask 48b and layer 11 together.

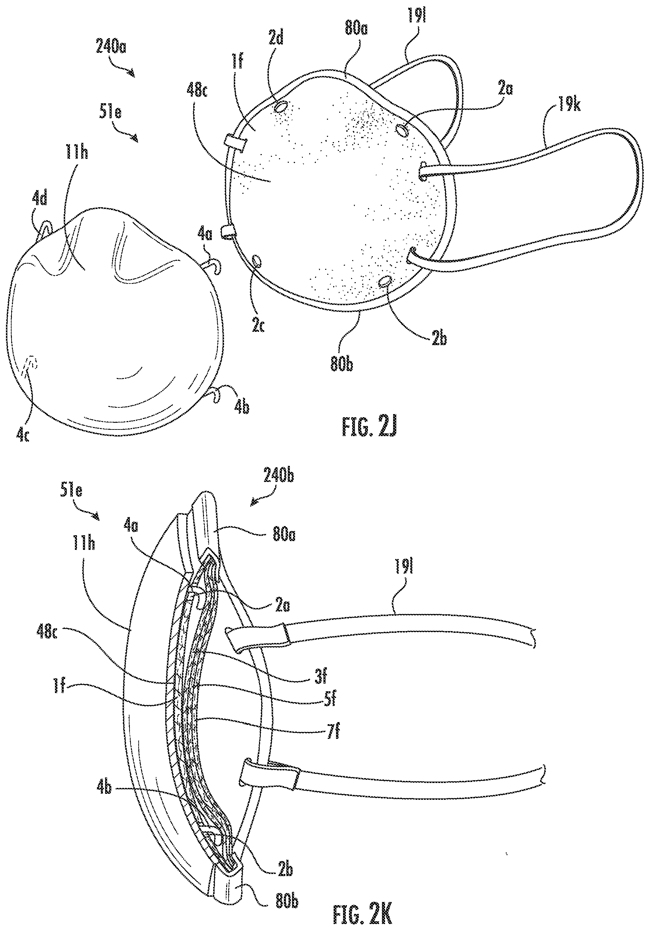

FIG. 2J illustrates at least one embodiment of a front view 240a of a mask 51e according to at least one embodiment of the present disclosure, and FIG. 2K illustrates at least one embodiment of a side cross-sectional view 240b of a mask 51b according to at least one embodiment of the present disclosure. In one or more embodiments, mask 51e is associated with a modification with respect to mask 51a, e.g. layer 11e.

The mask 51e can include a first layer 11h that is composed primarily of metal. In one or more embodiments, the first layer 11h is made of pure copper or substantially pure copper. In one or more embodiments, the metal layer can be made of rigid, ductile, or impressionable metal. In one or more embodiments, the first layer 11h is made entirely of or primarily (e.g. the majority of the mask 11h or layer 11h), including the majority of the surface area) of pure copper or substantially pure copper plate with another metal. For example, the front portion of the first layer 11h can be copper plate (including the majority of the surface area of the frontal portion of the layer 11h) and another metal can be used to form the rest of the body of the first layer 11h, including but not limited to brass or bronze, zinc , tin, nickel, silver, gold, iron, etc. In one or more embodiments, the first layer 11h can be entirely a metal foil, e.g. copper foil, or it can be partially metal foil and partially solid and rigid copper metal. The first layer 11h can be designed to be of any shape associated with a facial mask or an existing or other suitable antiviral mask currently available in the market, and can cover the exposed portions of a user's face, e.g. the mouth and nose. In one or more embodiments, the shape of the first layer 11h can take the same shape, with the same, substantially the same, or different dimensions as a second, underlying antiviral mask 48c, e.g. an n95 mask. The dimensions of the first layer 11h can be adjusted in the x (horizontal), y (vertical), or z (from the perspective of the user's face in the event of a protrusion) direction as needed. For example, the first layer 11h can have the same dimensions as the underlying mask 48c so as to fit exactly over the underlying mask 48c, or adjustments can be made, e.g. half (0.5) a centimeters to five (5) centimeters in each direction, such as to completely cover the underlying mask 48c, while not contacting at least certain portions of the underlying mask 48c.

As shown, and according to one or more embodiments, the first layer 11h is associated with concaves 15h, 15g and protrusion 16g, which corresponds to the shape of the underlying mask 48c.

In one or more embodiments, the first layer 11h can be made using any suitable manufacturing process that molds or otherwise yields a desired shape for metal material, where the steps can include one or more of taking a raw piece of metal, e.g. copper, and performing hot rolling, cold rolling, annealing, hammering, molding (using a mold that matches the desired shape of a facial mask that the copper is to ultimately take the form of), and any other suitable manufacturing step. In one or more embodiments, where a metal foil is desired, any suitable process for forming a metal foil can be used. In the case of copper, the copper foil can be made using electrodeposition and/or rolling and/or any suitable shaping or molding technique. In the case where the first layer 11h is made of more than one metal or a metal foil and solid metal, any suitable manufacturing step can be used to combine the two materials, including welding and/or using a suitable adhesive. For example, when the first layer 11h is made of a combination of rigid and solid copper metal and copper foil, a cyanoacrylate adhesive can be used. The above steps are exemplary, and any suitable method for shaping metals, e.g. copper, and/or combining metal materials can be used as deemed advantageous for a particular application.

In one or more embodiments, the first layer 11h can be made using a three-dimensional printing process, where a technician utilizes the raw material or materials desired for the first layer 11h and set one or more three-dimensional printing machine to perform one or more steps to produce the first layer 11h with the shape and dimensions that are desired for a particular application. For example, the three dimensional printing process and associated three dimensional printing machines can be set to produce a solid copper layer 11h made of pure or substantially pure copper metal with dimensions that can completely cover mask 48c, cover the majority of the surface area of mask 48c, or otherwise cover exposed surfaces of a user's face, including the nose and mouth.

In one or more embodiments, the underlying mask 48c can include one or more layers of material that together or in combination form a mask 48c of sufficient quality to prevent antiviral material from reaching a user's face. The underlying mask 48c can include any number of layers known to one in the ordinary skill of the art as useful alone or in combination to form an antiviral mask, including any suitable mask or layers of a mask currently with antiviral properties, e.g. a certified n95 mask. In one or more embodiments, and by way of non-limiting example, the underlying mask an outer layer 1f of non-woven polypropylene , a second filler layer 3f of melt-blown non-woven polypropylene , a third layer 5f of supporting material such as modacrylic, and a fourth layer inner-layer of non-woven polypropylene 7f. In one or more embodiments, the outer layer 1f can be spun-bond polypropylene, the second layer 3f can be a cellulose, polyester or cellulose and polyester hybrid, the third layer 5f can be a melt-blown polypropylene filter material and the fourth layer 7f can also be spun-bound polypropylene. Any other configuration of a known antiviral mask, with less or more layer and with different materials, including plastic layers, can be used for the underlying antiviral mask 48c, and the description of this paragraph is exemplary.

In one or more embodiments, metal layer 11h has one or more hooks 4a, 4b, 4c. and 4d, which corresponds to one or more holes or openings 2a, 2b, 2c, and 2d in relation to mask 48c. In one or more embodiments, as stated and implied herein, the metal layer 11h has one or more hooks 4a, 4b, 4c, and 4d and is shaped as a facial mask. In one or more embodiments, the one or more hooks 4a, 4b, 4c, and 4d can be metal hooks that correspond to the metal composition of the metal layer 11h. For example, in one or more embodiments, if the metal layer 11h is a copper mask, then the one or more hooks 4a, 4b, 4c, and 4d can similarly be copper hooks, where in one or more embodiments the copper hooks 4a, 4b, 4c, and 4d can be welded or adhered onto the metal layer 11h using any suitable adhesive as disclosed herein or otherwise suitable, e.g. an acrylic adhesive, or the copper hooks 4a, 4b, 4c, and 4d can be otherwise attached to the metal layer 11h using any other suitable manufacturing process or technique, including using one or more three-dimensional printing operations with one or more three-dimensional printing devices to produce the metal layer 11h with the hooks 4a, 4b, 4c, and 4d. In one or more embodiments, the one or more hooks can 4a, 4b, 4c, or 4d can be any other suitable metal or material, including a plastic material, and can be attached to the metal layer 11h using any suitable technique, including any suitable adhesive disclosed herein or otherwise suitable for adhering the desired material onto the metal layer 11h.

In one or more embodiments, the one or more holes 2a, 2b, 2c, and 2d of mask 48c can be through all of the layers of mask 48c or solely through the first layer 1b, and can be made using any suitable manufacturing technique, including puncturing, cutting, etc.

In one or more embodiments, and as shown, mask 48c has bands or straps 19l and 19k, e.g. elastic or adjustable bands or elastic or adjustable straps, for attaching around a user's head or over or under a user's ears. The elastic bands or straps 19l and 19k can be any suitable material including rubber, plastic, a polymer based material, a material that corresponds to one of the layers of mask 48c, cloth, silk, or any other suitable material used for bands or straps for articles worn by user's, including masks. In one or more embodiments, the bands or straps 19f and 19e can each be one continuous band or separate bands on each end of their respective ends. The bands or straps 19f and 19e can be attached to mask 48c using any suitable manufacturing or attachment process. In one or more embodiments, the hooks of metal layer 11h are inserted into the holes or openings 2a, 2b, 2c, or 2d and mask 48c supports metal layer 11h such that the bands or straps 19l and 19k attach mask 48c to a user, and by extension, mask 51e to a face of a user.

In one or more embodiments, the mask 48c can have a weight between .15 kilograms to .5 kilograms and with dimensions between five (5) centimeters and twenty-five (25) centimeters in the lateral (x) direction and vertical (y) direction, and with the protrusion extending one (1) centimeter to fifteen (15) centimeters in the z-direction, as measured from the top or bottom most portion, in the vertical (y) direction, of where the mask 48c contacts a user's face. In one or more embodiments, the metal layer 11h can have a weight of .075 kilograms to two (2) kilograms and with between three (3) centimeters and forty (40) centimeters in the lateral (x) direction and vertical (y) direction, and with the protrusion extending one (1) centimeter to thirty (30) centimeters in the z-direction, as measured from the top or bottom most portion, in the vertical (y) direction of where the metal layer 11h contacts the face of a user or the mask 48c. In one or more embodiments, the weight and dimensions of the metal layer 11h are selected so as to be supportable by mask 48c, where in one or more embodiments the weights and dimensions of metal layer 11h can be any suitable weight and dimensions for a metal mask as disclosed herein, and where in one or more embodiments the weight of metal layer 11h can be less than half the weight of mask 48c.

In one or more embodiments, to increase the stability of the overall mask 51e, metal layer 11h can be associated with one or more clasps 81a, 81b that are attached to periphery portions 80a, 80b of mask 48c. In one or more embodiments, the one or more clasps 81a, 81b can be metal clasps that correspond to the metal composition of the metal layer 11h. For example, in one or more embodiments, if the metal layer 11h is a copper mask, then the one or more clasps 81a, 81b can similarly be copper clasps, where in one or more embodiments the copper clasps 81a, 81b can be welded or adhered onto the metal layer 11h using any suitable adhesive as disclosed herein or otherwise suitable, e.g. an acrylic adhesive, or the copper clasps 81a, 81b can be otherwise attached to the metal layer 11h using any other suitable manufacturing process or technique, including using one or more three-dimensional printing operations with one or more three-dimensional printing devices to produce the metal layer 11h with the hooks 4a, 4b, 4c, and 4d. In one or more embodiments, the one or more copper clasps 81a, 81b can be any other suitable metal or material, including a plastic material, and can be attached to the metal layer 11h using any suitable technique, including any suitable adhesive disclosed herein or otherwise suitable for adhering the desired material onto the metal layer 11h.

In one or more embodiments, if the dimensions or shape of metal layer 11h are adjusted so as not to match the shape or dimensions of mask 48c or fully encompass mask 48c, then the clasps, 81a, 81b, hooks 4a, 4b, 4c, and 4d and/or the holes 2a, 2b, 2c, and 2d can also be adjusted so that metal layer 11h can attach properly in relation to mask 48c.

In one or more embodiments, the metal layer 11h can, in addition to having clasps 81a, 81b and/or the hooks 4a, 4b, 4c, and 4f, otherwise take the shape, form, weight, have the associated dimension of, and be made of materials associated with other layers as disclosed herein, including but not limited to 11a, 11b, and 11z.

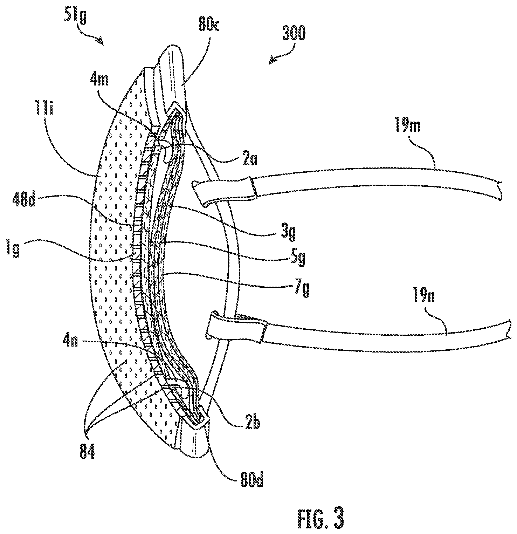

FIG. 3 illustrates at illustrates at least one embodiment of a side cross-sectional view 300 of a mask 51g according to at least one embodiment of the present disclosure. In one or more embodiments, mask 51g expressly illustrates that one or more features of the various embodiments of the present disclosure can be combined. For example, mask 51g can include a metal layer 11i that is shaped as a facial mask that includes one or more micro-holes 84 or micro-openings 84. The metal layer 11i can be any suitable material, shape, size, and weight as is suitable for a particular application, including as disclosed herein, and including that the metal meta layer 11i being a copper based mask shape that matches or substantially matches an underlying mask 48d. In one or more embodiments, the underlying mask 48d can be any suitable mask that can impede harmful material or organisms, and can include one or more layers 1g, 3g, 5g, and 7g. In one or more embodiments, the one or more layers 1g, 3g, 5g, and 7g can be layers as specified with respect to other embodiments, including with respect to mask 20, and at least one of the one or more layers 1g, 3g, 5g, and 7g can include at least one polypropylene layer. In one or more embodiments, the metal layer 11i can further include one or more hooks 4m, 4n that can be inserted into holes 2a, 2b that are associated with mask 48d. In one or more embodiments, the metal layer 11i can further include clasps 80c, 80d that attach to the periphery and behind the underlying mask 48d. The one or more hooks 4m, 4n and clasps 80c, 80d can be any material or take any form as described herein with reference to other embodiments. In one or more embodiments, the mask 48d can have straps or bands 19m and 19n that can support the weight of the combination of mask 48d and layer 11i. In one or more embodiments, as stated and implied herein, the various features, layers, masks, etc., of mask 51g can be made using any of the methods and techniques as stated herein, and the weight, dimensions, form, and shape of the layers and features of mask 51g can be as specified with respect to other embodiments or as is otherwise suitable for a particular application.

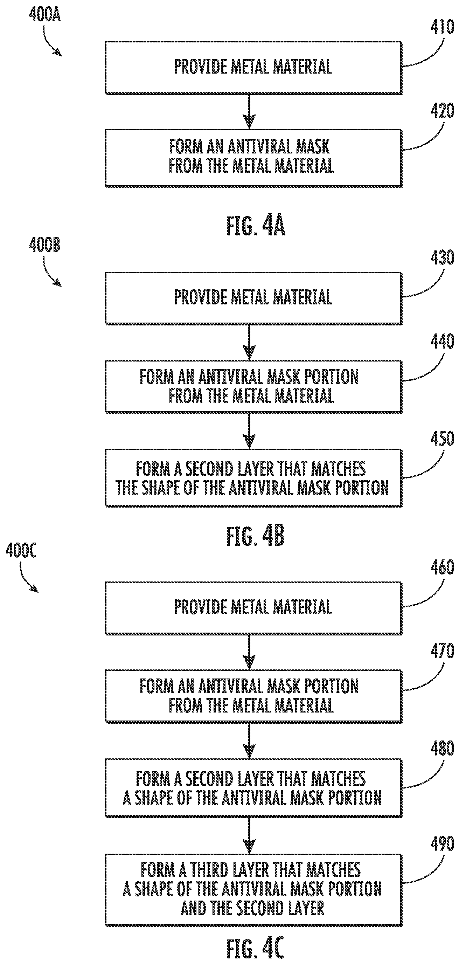

FIG. 4A illustrates a method of making an antiviral mask 400A according to at least one embodiment of the present disclosure. The method can include providing raw metal material 410. The raw metal material can include one metal, multiple metals, or one or more metal allows. In one or more embodiments, the raw metal material can include one or more of brass or bronze, zinc, tin, nickel, silver, gold, iron, etc. In various embodiments, the metal material can be entirely pure copper or substantially pure copper material.

In one or more embodiments, the method can include forming an antiviral mask from the metal material 420, where the antiviral mask has at least one property that protects against viruses, bacteria, carrier mechanisms for viruses or bacteria, or other harmful materials. In one or more embodiments, the raw metal material can be formed into a stand-alone metallic mask that can be used independently of other masks, where the shape of the metallic mask can be any suitable shape that covers exposed surfaces of a user's face. In one or more embodiments, the metal mask is a pure metallic mask composed of one or more metals and metal alloys. In one or more embodiments, depending on the metal material and the form of the metal material that is desired, a series of manufacturing steps can be performed with respect to the raw metal material, e.g. copper, including performing hot rolling, cold rolling, annealing, hammering, molding (using a mold that matches the desired shape of a facial mask that the copper is to ultimately take the form of), electrodeposition and/or rolling and/or any suitable shaping or molding technique, and any other suitable manufacturing step. In the case where multiple metals or multiple metal alloys are used, the steps can also include welding and/or using a suitable adhesive to combine them. In one or more embodiments, the metallic mask can be made by processing the raw metallic material using a three-dimensional printing process, where a technician utilizes the raw material or materials desired for the metallic mask and sets one or more three-dimensional printing machines to perform one or more printing steps to produce a mask with a desired shape, form, dimensions, and weight. In one or more embodiments, the mask is a solid metallic mask made of pure or substantially pure copper and can minimize the life duration of viruses that come in contact therewith as a result of the properties associated with copper. As stated and implied herein, the metal mask can be entirely metal or metal alloy and can be made from pure or substantially pure copper. In one or more embodiments, the metallic mask can be used alone or in conjunction with another mask, and the metallic mask can take any suitable shape that covers the exposed portion of a user's face, e.g. nose and mouth. In one or more embodiments, the metallic mask can have any suitable attachment mechanism to attach to a user's face, including but not limited to straps or bands.

FIG. 4B illustrate a method of making an antiviral mask 400B according to at least one embodiment of the present disclosure. In one or more embodiments, the method can include providing raw metal material 430. The raw metal material can include one metal, multiple metals, or one or more metal allows. In one or more embodiments, the raw metal material can include one or more of brass or bronze, zinc, tin, nickel, silver, gold, iron, etc. In various embodiments, the metal material can be entirely pure copper or substantially pure copper material.

In one or more embodiments, the method can including forming an antiviral mask from the metal material 440, where the antiviral mask has at least one property that protects against viruses, bacteria, carrier mechanisms for viruses or bacteria, or other harmful materials. In one or more embodiments, the raw metal material can be formed into a stand-alone metallic mask that can be used independently of other masks, where the shape of the metallic mask can be any suitable shape that covers exposed surfaces of a user's face. In one or more embodiments, the metal mask is a pure metallic mask composed of one or more metals and metal alloys. In one or more embodiments, depending on the metal material and the form of the metal material that is desired, a series of manufacturing steps can be performed with respect to the raw metal material, e.g. copper, including performing hot rolling, cold rolling, annealing, hammering, molding (using a mold that matches the desired shape of a facial mask that the copper is to ultimately take the form of), electrodeposition and/or rolling and/or any suitable shaping or molding technique, and any other suitable manufacturing step. In the case where multiple metals or multiple metal alloys are used, the steps can also include welding and/or using a suitable adhesive to combine them. In one or more embodiments, the metallic mask can be made by processing the raw metallic material using a three-dimensional printing process, where a technician utilizes the raw material or materials desired for the metallic mask and sets one or more three-dimensional printing machines to perform one or more printing steps to produce a mask with a desired shape, form, dimensions, and weight. In one or more embodiments, the mask is a solid metallic mask made of pure or substantially pure copper and can minimize the life duration of viruses that come in contact therewith as a result of the properties associated with copper. As stated and implied herein, the metal mask can be entirely metal or metal alloy and can be made from pure or substantially pure copper.

The method can further include forming a second layer of material on the mask 450. The additional layer the additional layer can be any one of any of the materials associated a polypropylene material, another metal layer composed of the same or different materials as the metal mask made pursuant to 440, a thermoset, a thermoplastic, any other plastic, any electrical insulator material (including any suitable electrical insulation tape), any metal foam (including copper foam), any metal mesh or screen, any metal chain-link (including copper chain-link), metal foil (including copper foil) and any metal textile (including copper textile), any cloth, any cotton, any silk, or any other textile.

In one or more embodiments, any suitable technique can be used to shape and mold the second layer to match the shape of the shape of the metal mask, including, as suitable for the particular material, rolling, annealing, hammering, sewing, drilling, laser drilling, cutting, sawing, molding, or any other suitable technique. In one or more embodiments, as is suitable for a particular material, one or more three-dimensional printing operations using one or more three-dimensional printing devices can be used to produce the second layer such that the second layer matches the shape and dimensions of the metal mask.

In one or more embodiments, the additional layer can be adhered onto the metal layer using any suitable adhesive or welding technique, as is suitable for the materials used. For example, in the instance where the metal mask is a copper mask, depending on the material composition of the additional layer , the adhesive can be selected from at least one of one or more of any suitable epoxy, glue (including any suitable glue that contains one or more of a hane prepolymer, a diphenylmethane-diisocyanate, one or more isomers, and homologue), acrylic, cyanoacrylate, or any other suitable adhesive. By way of another example, when the second or additional layer is insulating tape, the insulating tape can be shaped and taped to metal layer 11a using any suitable shaping, cutting, manufacturing, and attaching technique. In one or more embodiments, where a material from the above materials discussed with respect to the additional layer is a material that has electrically insulating properties, according to one or more embodiments, the additional layer can offer an advantage when the metal mask with another mask where the another mask has layers that have its protection characteristics preserved when the other mask, e.g. as opposed to being in direct contact with metal, such as copper, and additionally, in the instances where metal feels uncomfortable to a user, the insulating material may offer additional comfort, including in embodiments where the combination of the metal mask and the additional layer are used without another protective mask.

In one or more embodiments, where the metal mask includes one or more holes, the additional layer can also include one or more holes (not shown) by using any suitable technique appropriate for the particular material used for additional layer, including lasering, drilling, puncturing, sewing, cutting, etc.

FIG. 4C illustrate a method of making an antiviral mask 400C according to at least one embodiment of the present disclosure. In one or more embodiments, the method can include providing raw metal material 460. The raw metal material can include one metal, multiple metals, or one or more metal allows. In one or more embodiments, the raw metal material can include one or more of brass or bronze, zinc, tin, nickel, silver, gold, iron, etc. In various embodiments, the metal material can be entirely pure copper or substantially pure copper material.

In one or more embodiments, the method can including forming an antiviral mask from the metal material 470, where the antiviral mask has at least one property that protects against viruses, bacteria, carrier mechanisms for viruses or bacteria, or other harmful materials. In one or more embodiments, the raw metal material can be formed into a stand-alone metallic mask that can be used independently of other masks, where the shape of the metallic mask can be any suitable shape that covers exposed surfaces of a user's face. In one or more embodiments, the metal mask is a pure metallic mask composed of one or more metals and metal alloys. In one or more embodiments, depending on the metal material and the form of the metal material that is desired, a series of manufacturing steps can be performed with respect to the raw metal material, e.g. copper, including performing hot rolling, cold rolling, annealing, hammering, molding (using a mold that matches the desired shape of a facial mask that the copper is to ultimately take the form of), electrodeposition and/or rolling and/or any suitable shaping or molding technique, and any other suitable manufacturing step. In the case where multiple metals or multiple metal alloys are used, the steps can also include welding and/or using a suitable adhesive to combine them. In one or more embodiments, the metallic mask can be made by processing the raw metallic material using a three-dimensional printing process, where a technician utilizes the raw material or materials desired for the metallic mask and sets one or more three-dimensional printing machines to perform one or more printing steps to produce a mask with a desired shape, form, dimensions, and weight. In one or more embodiments, the mask is a solid metallic mask made of pure or substantially pure copper and can minimize the life duration of viruses that come in contact therewith as a result of the properties associated with copper. As stated and implied herein, the metal mask can be entirely metal or metal alloy and can be made from pure or substantially pure copper.

The method can further include forming a second layer of material on the mask 450. The additional layer the additional layer can be any one of any of the materials associated a polypropylene material, another metal layer composed of the same or different materials as the metal mask made pursuant to 460, a thermoset, a thermoplastic, any other plastic, any electrical insulator material (including any suitable electrical insulation tape), any metal foam (including copper foam), any metal mesh or screen, any metal chain-link (including copper chain-link), metal foil (including copper foil) and any metal textile (including copper textile), any cloth, any cotton, any silk, or any other textile.

In one or more embodiments, any suitable technique can be used to shape and mold the second layer to match the shape of the shape of the metal mask, including, as suitable for the particular material, rolling, annealing, hammering, sewing, drilling, laser drilling, cutting, sawing, molding, or any other suitable technique. In one or more embodiments, as is suitable for a particular material, one or more three-dimensional printing operations using one or more three-dimensional printing devices can be used to produce the second layer such that the second layer matches the shape and dimensions of the metal mask.

In one or more embodiments, the additional layer can be adhered onto the metal layer using any suitable adhesive or welding technique, as is suitable for the materials used. For example, in the instance where the metal mask is a copper mask, depending on the material composition of the additional layer , the adhesive can be selected from at least one of one or more of any suitable epoxy, glue (including any suitable glue that contains one or more of a hane prepolymer, a diphenylmethane-diisocyanate, one or more isomers, and homologue), acrylic, cyanoacrylate, or any other suitable adhesive. By way of another example, when the second or additional layer is insulating tape, the insulating tape can be shaped and taped to metal layer 11a using any suitable shaping, cutting, manufacturing, and attaching technique. In one or more embodiments, where a material from the above materials discussed with respect to the additional layer is a material that has electrically insulating properties, according to one or more embodiments, the additional layer can offer an advantage when the metal mask with another mask where the another mask has layers that have its protection characteristics preserved when the other mask, e.g. as opposed to being in direct contact with metal, such as copper, and additionally, in the instances where metal feels uncomfortable to a user, the insulating material may offer additional comfort, including in embodiments where the combination of the metal mask and the additional layer are used without another protective mask.

In one or more embodiments, the method can include forming a third layer on the second layer 490. The third layer 490 can be composed of any materials associated with the second layer and attached to the second layer using any of the techniques disclosed herein.

In one or more embodiments (not shown), where the metal mask includes one or more holes, the second layer and the third layer can also include one or more holes (not shown) by using any suitable technique appropriate for the particular material used for additional layer, including lasering, drilling, puncturing, sewing, cutting, etc.

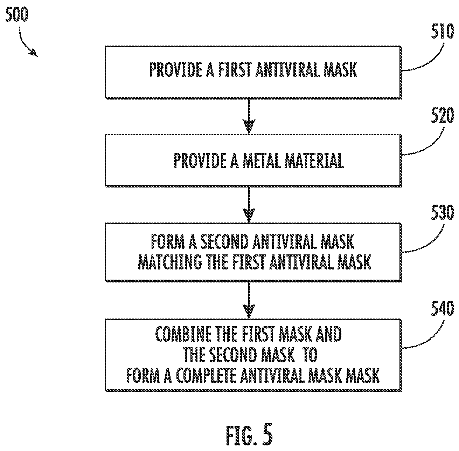

FIG. 5 illustrates at least one embodiment of a method for forming a mask configuration according to at least one embodiment of the present disclosure 500. The method can include providing a first antiviral mask, such as an n95 mask. The method can include providing raw metal material, as described with reference to FIGs. 4A-4C 510 and can include forming a metal mask from the metal material 520. The metal mask can be formed as described with reference to FIGs. 4A-4C, where the molding or three-dimensional printing process is adjusted such that the shape of the metal mask matches the shape of the first antiviral mask. In one or more embodiments, the first mask and the metal mask can be combined using any suitable mechanism, e.g. straps, as described herein 530.

Similarity and selection of reference numbers herein does not imply a limitation with respect to the scope of the teachings of the present disclosure and have been selected for convenience purposes. References, with respect to some embodiments, have been made as to "a metal layer," which is some embodiments is intended to reflect that "a metal layer" can be part of an overall mask configuration that includes another mask, however, it is restated for clarity herein that a "metal layer," in at least one embodiment, can be stand alone mask and can be used without an additional mask, and in at least one embodiment, a "metal layer" can take the shape of an underlying mask, and thus also be a mask in and of itself. Similarly, in at least one embodiment, "a metal layer" can have one or more additional layers and be a stand-alone mask, a metal layer with additional layers that can cover another mask, or a metal mask with additional mask shaped layers that can cover an existing mask. Expressly failing to show possible additional features with respect to an embodiment does not necessitate that features described herein are not combinable or applicable to the embodiment. Expressly failing to indicate that certain weights, dimensions, material concentrations or percentage compositions, shapes or other features with respect to any of the articles described herein should not be interpreted as limiting the scope of the present disclosure, the scope of the invention being defined by the claims. For example, "pure" copper has been defined to be a metal material, e.g. layer or mask, with ninety-nine percent copper, and "substantially copper" has been defined to mean "at least fifty percent copper," however the articles, masks, and layers described herein can be any percentage of copper (or another metal) as may be suitable for a particular application.

## Claims

1. A mask configuration (50f, 51g) comprising:
a first metallic layer (11b, 11i) that includes a plurality of micro-holes (83, 84), wherein the first metallic layer (11b, 11i) is shaped as a facial mask that can cover a nose and a mouth of a user;
a second layer (12) that matches the shape of the first metallic layer (11b, 11i), wherein the second layer (12) includes at least one of: a metallic material, a plastic, an electrical insulator, a metal foam, and a metal textile;
wherein the second layer (12) has a distinct material composition in relation to the first metallic layer (11b, 11i),
wherein the first metallic layer (11b, 11i) is substantially copper based, and
**characterized in that** the diameter of each of the plurality of micro-holes (83, 84) is between one micrometer and three micrometers.

2. The mask configuration (50f, 51g) of claim 1, wherein the plurality of micro-holes (83, 84) are spaced four micrometers apart.

## Patentansprüche

1. Maskenkonfiguration (50f, 51g), aufweisend:
ein erste metallische Schicht (11b, 11i), welche eine Mehrzahl von Mikrolöchern (83, 84) aufweist, wobei die erste metallische Schicht (11b, 11i) die Form einer Gesichtsmaske aufweist, welche eine Nase und einen Mund eines Benutzers bedecken kann;
eine zweite Schicht (12), welche dieselbe Form aufweist, wie die erste metallische Schicht (11b, 11i), wobei die zweite Schicht (12) mindestens eines der Elemente der folgenden Gruppe aufweist: einen metallischen Werkstoff, einen Kunststoff, einen elektrischen Isolator, einen Metallschaum und ein Metallgewebe;
wobei die zweite Schicht (12) eine Materialzusammensetzung ausweist, welche sich von jener der metallischen Schicht (11b, 11i) unterscheidet,
wobei die erste metallische Schicht (11b, 11i) im Wesentlichen auf Kupfer basiert, und **dadurch gekennzeichnet ist, dass** der Durchmesser jedes der Mehrzahl von Mikrolöchern (83, 84) zwischen einem und drei Mikrometer beträgt.

2. Maskenkonfiguration (50f, 51g) nach Anspruch 1, wobei die Mehrzahl von Mikrolöchern (83, 84) jeweils im Abstand von vier Mikrometern angeordnet sind.

## Revendications

1. Configuration de masque (50f, 51g), comprenant :
une première couche métallique (11b, 11i) qui inclut une pluralité de micro-trous (83, 84),
dans laquelle la première couche métallique (11b, 11i) est conformée comme un masque facial qui peut recouvrir le nez et la bouche d'un utilisateur ;
une deuxième couche (12) qui correspond à la forme de la première couche métallique (11b, 11i),
dans laquelle la deuxième couche (12) inclut au moins un matériau parmi : un matériau métallique, un matériau plastique, un isolant électrique, une mousse métallique, et un textile métallique ;
dans laquelle la deuxième couche (12) a une composition matérielle distincte de celle de la première couche métallique (11b, 11i),
dans laquelle la première couche métallique (11b, 11i) est substantiellement à base de cuivre, et
**caractérisée en ce que** le diamètre de chaque trou de la pluralité de micro-trous (83, 84) est compris entre un micromètre et trois micromètres.

2. Configuration de masque (50f, 51g) selon la revendication 1, dans laquelle les trous de la pluralité de micro-trous (83, 84) sont espacés de quatre micromètres.
